# EUROPEAN PATENT APPLICATION

(11) **EP 3 068 111 A1**
(43) Date of publication of application: **14.09.2016**
(21) Application number: 16159301.7
(22) Date of filing: 09.03.2016
(51) Int. Cl.: H04L 29/08, H04L 12/58

(54) **STATUS INFORMATION MANAGEMENT APPARATUS, STATUS INFORMATION PROCESSING METHOD, TRANSMISSION SYSTEM, AND RECORDING MEDIUM**

(30) Priority: 11.03.2015 JP 2015048222; 29.05.2015 JP 2015109676
(71) Applicant: Ricoh Company, Ltd., Tokyo 143-8555 (JP)
(72) Inventor: HASEGAWA, Takashi, Tokyo, 143-8555 (JP); TAKAYASU, Osamu, Tokyo, 143-8555 (JP)
(74) Representative: Schwabe - Sandmair - Marx

(57) **Abstract**

A disclosed status information management apparatus includes a receiver configured to receive a report of change in status information of one of communications terminals from a transmission management apparatus that manages communications services between the communications terminals, an acquisition unit configured to acquire integrated status information indicating a status capable of transmitting a response or a status incapable of transmitting a response, via one of the communications services by acquiring respective pieces of the status information of the communications services concurrently used by a user of the communications terminal corresponding to the received status information, and a transmitter configured to transmit the integrated status information to the transmission management apparatus that manages the communications services concurrently used by the user.

## Description

### BACKGROUND OF THE INVENTION

### 1. Field of the Invention

The disclosures discussed herein generally relate to a status information management apparatus, status information processing method, transmission system, and a non-transitory recording medium storing a program.

### 2. Description of the Related Art

Communications services that allow two or more remote locations to communicate via communications networks such as the Internet are increasingly becoming popular. Examples of such services include text chat services that exchange text messages, videoconferencing (TV conference) services that enable the conduct of remote conferences, and social networking services (SNSs) that construct social networks through exchanges over the Internet.

Recent communications terminals are provided with a technology to enable a single communications terminal to access multiple communications services, where a user of the communications terminal may be able to acknowledge statuses of communications partners on the different services by acquiring presence information indicating the communications statuses of the communications partners on the respective services.

Commonly used communications services have, however, independent presence information, and when the user communicates with the same communications partner via different services, the user needs to log into each of the services to merely check the presence information of the communications partner on the corresponding service. This may be time-consuming work for the users.

To reduce such time-consuming work, a related art technology (e.g., Patent Document 1) proposes a system to receive presence information from a certain service, convert the received presence information into a standard description (e.g., online/offline), further inversely convert the standard description into words in compliance with display format suited to the corresponding service, and send the resulting words to the corresponding service.

In addition, another related art technology (e.g., Patent Document 2) proposes a system to cause a presence server to manage presence information of all the services as a presence information list and allow the difference services to share the presence information list.

The above-described technologies enable users to check the statuses of the communications partners in the different services; however, the users are unlikely to easily identify whether the users are able to communicate with their communications partners (whether the communications partners are able to respond to the users) via some kind of services. In other words, the users may need to check all the statuses of their communications partners in the different services in order to identify whether the users are able to have communications with the communications partners as well as identifying via which service the users are able to have communications with their communications partners. This may degrade the efficiency in operability. Such degradation in operability may become more significant as the number of services available to the communications terminals increases.

### RELATED ART DOCUMENTS

### PATENT DOCUMENTS

Patent Document 1: Japanese Unexamined Patent Application Publication No. 2005-135216
Patent Document 2: Japanese Patent No. 4317061

### SUMMARY OF THE INVENTION

Accordingly, it is a general object in one embodiment of the present invention to provide a technology capable of clearly displaying statuses of communications partners to increase the operability that substantially obviates one or more problems caused by the limitations and disadvantages of the related art.

According to an aspect of embodiments, there is provided a status information management apparatus that includes a receiver configured to receive a report of change in status information of one of communications terminals from a transmission management apparatus that manages communications services between the communications terminals; an acquisition unit configured to acquire integrated status information indicating a status capable of transmitting a response or a status incapable of transmitting a response, via one of the communications services by acquiring respective pieces of the status information of the communications services concurrently used by a user of the communications terminal corresponding to the received status information; and a transmitter configured to transmit the integrated status information to the transmission management apparatus that manages the communications services concurrently used by the user.

Other objects, features and advantages of the present invention will become more apparent from the following detailed description when read in conjunction with the accompanying drawings.

### BRIEF DESCRIPTION OF THE DRAWINGS

FIG. 1 is a schematic diagram illustrating an example of a transmission system according to an embodiment;
FIG. 2 is a hardware configuration diagram illustrating an example of a TV conference-specific terminal according to an embodiment;
FIG. 3 is a hardware configuration diagram illustrating an example of a mobile terminal according to an embodiment;
FIG. 4 is a hardware configuration diagram of a relay apparatus, a transmission management system, a common information management apparatus, a program providing system, and a maintenance system according to an embodiment;
FIG. 5 is a functional block diagram illustrating a transmission terminal, the relay apparatus, the common information management apparatus, and the transmission management system constituting the transmission system according to the embodiment;
FIG. 6 is a configuration diagram illustrating an example of a relay apparatus management table;
FIG. 7 is a configuration diagram illustrating an example of a session management table;
FIGS. 8A and 8B are configuration diagrams illustrating examples of a destination list management table;
FIG. 9 is a configuration diagram illustrating an example of an authentication management table;
FIGS. 10A to 10D are diagrams illustrating examples of various types of tables maintained in a status information management DB;
FIG. 11 is a sequence diagram illustrating an example of a process from a TV conference-specific terminal login step to a destination list display step according to an embodiment;
FIG. 12 is a flowchart illustrating an example of an authentication process according to an embodiment;
FIG. 13 is a diagram illustrating an example of a destination list screen with a display of presence;
FIG. 14 is a diagram illustrating another example of a destination list screen with a display of presence;
FIG. 15 is a sequence diagram illustrating an example of a process from a mobile terminal login step to a destination list display step according to an embodiment;
FIG. 16 is a flowchart illustrating a process example performed by a status information controller;
FIG. 17 is a sequence diagram illustrating a process example when a client updates presence information;
FIGS. 18A to 18D are diagrams illustrating examples of various types of tables maintained in the status information management DB;
FIG. 19 is a flowchart illustrating another process example performed by the status information controller;
FIG. 20 is a sequence diagram illustrating another process example when a client updates presence information;
FIGS. 21A and 21B are diagrams illustrating examples of integrated destination lists;
FIG. 22 is a flowchart illustrating another process example performed by the status information controller;
FIG. 23 is a sequence diagram illustrating another process example when a client updates presence information; and
FIG. 24 is a sequence diagram illustrating a process example to initiate connections between multiple terminals according to an embodiment.

### DETAILED DESCRIPTION OF THE PREFERRED EMBODIMENTS

The following describes preferred embodiments with reference to the accompanying drawings.

### OVERALL CONFIGURATION OF TRANSMISSION SYSTEM

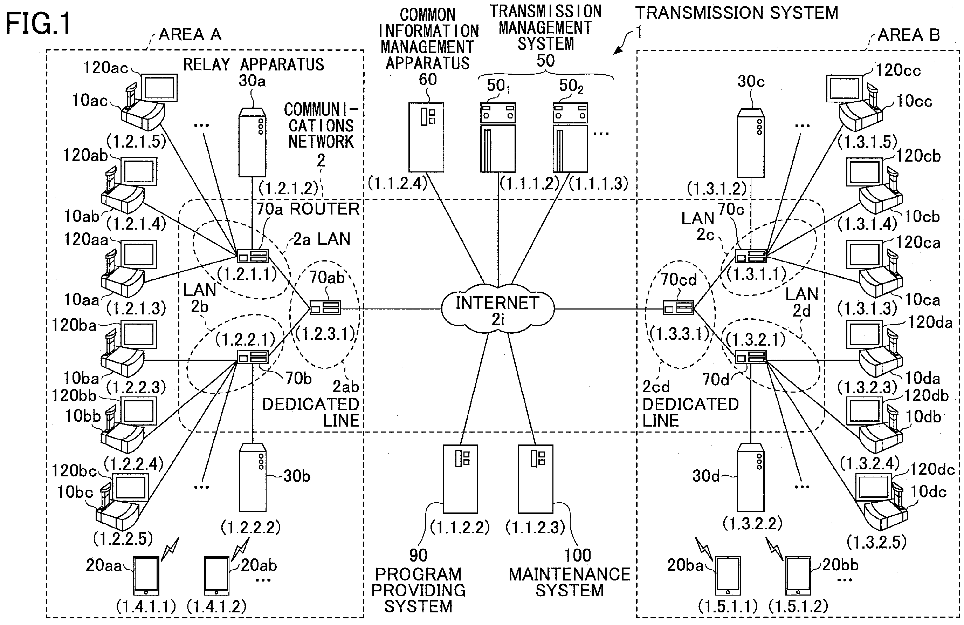

FIG. 1 is a schematic diagram illustrating an example of a transmission system according to an embodiment.

Examples of the transmission system include a data providing system configured to transmit content data in one direction from one transmission terminal to another transmission terminal via a transmission management system, or a communications system configured to mutually propagate information, emotions, and the like between multiple transmission terminals via a transmission management system. The communications system is configured to mutually propagate information, emotions, and the like between multiple communication terminals (corresponding to the "transmission terminals") via a communication management system (corresponding to the "transmission management system"). Examples of such a communications system include a TV conference system, a video telephony system, and an audio teleconference system, a voice telephony system, a PC (personal computer) screen sharing system, and a text chat system, and the like.

The following embodiments describe the transmission system as an example of a communications system based on the assumption of a system capable of conducting a TV conference or text chat. The communications system of the embodiments specifically serves as a transmission system capable of providing a TV conference service and a text chat service. The following embodiments further describe the transmission management system based on the assumption of the TV conference management system and the text chat management system serving as examples of the communication management system. Similarly, the following embodiments describe a transmission terminal based on the assumption of a terminal capable of performing one or both of the TV conference and the text chat serving as an example of a communication terminal.

The transmission terminal or the transmission management system of the embodiment is not only applied to the above-described transmission system but is also applied to other communications systems, data providing systems, and the like.

The transmission system 1 illustrated in FIG. 1 includes multiple transmission terminals (10aa, 10ab, ..., 20aa, 20ab, ...), respective displays (120aa, 120ab, ...) for the transmission terminals (10aa, 10ab, ...), multiple relay apparatuses (30a, 30b, ...), multiple transmission management systems (50₁, 50₂, ...), a common information management apparatus 60, a program providing system 90, and a maintenance system 100.

The transmission terminals 10 are configured to transmit or receive image data and sound data as an example of content data. That is, the transmission terminals 10 are TV conference terminals capable of utilizing the TV conference service. In this embodiment, the transmission terminals 10 may be TV conference service-specific terminals (TV conference-specific terminals). The transmission terminals 10 may, hereinafter, be referred to as the TV conference-specific terminals 10. The TV conference-specific terminals 10 may be managed by the transmission management system 50₁ configured to manage calling control of the TV conference service. Note that the TV conference-specific terminal 10 is not limited to a terminal having hardware itself being specifically designed for the TV conference service but includes a terminal having general-purpose hardware capable of utilizing applications specifically designed for the TV conference service.

Further, when the communication management system serves as the audio teleconference system, or the voice telephony system, sound data may be used as an example of content data to be transmitted and received for utilizing the voice telephony service.

On the other hand, the transmission terminals 20 are configured to transmit or receive image data and sound data, or text data as an example of content data. The transmission terminals 20 may specifically serve as terminals capable of utilizing the TV conference or the text chat. In this embodiment, the transmission terminals 20 may be general-purpose mobile terminals such as tablet terminals, mobile phones, and smartphones capable of utilizing both the TV conference service and the chat service unless otherwise specified. The transmission terminals 20 may be configured to at least utilize the text chat service and is not necessarily configured to utilize the TV conference service. Note that the transmission terminals 20 may, for example, be wirelessly connected to a communications network 2 via a mobile phone communications network or WiFi (wireless fidelity). Hereinafter, the transmission terminals 20 may be represented as the mobile terminals 20. The mobile terminals 20 may be managed by the transmission management system 50₂ configured to manage calling control of the text chat service.

Note that the above-described TV conference specific terminals 10 and the mobile terminals 20 are examples of the communication terminals. Examples of the communication terminals include various types of electronic apparatuses such as gaming apparatuses, general-purpose PC terminals, car navigation terminals installed on vehicles, projection apparatuses such as projectors, electronic whiteboards, wearable terminals in addition to conference-specific terminals, tablet terminals, mobile phones, and smartphones.

In the following, any one of the TV conference-specific terminals (10aa, 10ab, ...) may be referred to as a "TV conference-specific terminal 10", and any one of the mobile terminals (20aa, 20ab, ...) may be referred to as a "mobile terminal 20".

Likewise, any one of the displays (120aa, 120ab, ...) may be referred to as a "display 120", and any one of the relay apparatuses (30a, 30b, ...) may be referred to as a "relay apparatus 30". In addition, any one of the transmission management systems (50₁, 50₂, ...) may be referred to as a "transmission management system 50". Further, one of the TV conference-specific terminal 10 and the mobile terminal 20 serving as a terminal that requests the other one of the TV conference-specific terminal 10 and the mobile terminal 20 to start a TV conference or the text chat may be referred to as a "request source terminal", and a terminal serving as a request destination may be referred to as a "destination terminal".

In the transmission system 1, a management information session is established between the request source terminal and the destination terminal for transmitting and receiving various types of management information via the transmission management system 50. Further, a session for transmitting and receiving content data via the relay apparatus 30 is established between the request source terminal and the destination terminal. Note that the content data transmitted and received between the request source terminal and the destination terminal are text data alone, a session is established via the transmission management system 50 between the request source terminal and the destination terminal, or a session may directly be established between the request source terminal and the destination terminal.

In the following, when the TV conference-specific terminal 10 serves as the request source terminal, a session is established via the transmission management system 50₁. On the other hand, when the mobile terminal 20 serves as the request source terminal, a session is established via the transmission management system 50₂. Specifically, calling control of the TV conference-specific terminal 10 utilizing the TV conference service alone is managed by the transmission management system 50₁ whereas calling control of the mobile terminal 20 utilizing the text chat service is managed by the transmission management system 50₂. As described above, calling control for different services may be managed by different transmission management systems 50, and hence calling control for any one of the services may be managed by a corresponding one of the transmission management systems 50. In the following, the management system 50₁ is referred to as a "TV conference management system 50₁", and the management system 50₂ is referred to as a "text chat management system 50₂".

The relay apparatuses 30 illustrated in FIG. 1 are configured to relay content data between the TV conference-specific terminals 10 and the mobile terminals 20.

The transmission management systems 50 are configured to perform login authentication, calling status management and destination list management of the transmission terminals, and calling status management of the relay apparatuses 30. The above-described management may be conducted by each of the transmission management systems 50 configured to manage calling control of different services. Specifically speaking, the login authentication, the calling status management and the destination list management of the TV conference-specific terminals 10, the calling statuses of the relay apparatuses 30, and the like are managed by the TV conference management system 50₁. On the other hand, the login authentication, the calling status management and the destination list management of the mobile terminals 20, the calling statuses of the relay apparatuses 30, and the like are managed by the text chat management system 50₂. Note that as will be described later, status information of the transmission terminals such as calling status management is mutually reported between the associated transmission management systems 50.

The common information management apparatus 60 includes a database (DB) server or the like configured to manage information commonly used between the transmission management systems 50. The information commonly used between the transmission management systems 50 include status information (presence information). The common information management apparatus 60 may be a storage device such as a network storage configured to store information commonly used between the transmission management systems 50. Note that in this embodiment, the common information management apparatus 60 is provided separately from the transmission management systems 50. However, the common information management apparatus 60 may be provided in each of the transmission management systems 50. Note that the function associated with the status information (presence information) may be separate from the common information management apparatus 60 to independently form a presence information management server (presence server).

Routers (70a, 70b, 70c, 70d, 70ab, and 70cd) are configured to select an optimal one of routes for the content data. Note that in the following, any one of the routers (70a, 70b, 70c, 70d, 70ab, and 70cd) is referred to as a "router 70".

The program providing system 90 includes a later-described HD (hard disk) 304, and is configured to store terminal-specific programs for causing the TV conference-specific terminals 10 or the mobile terminals 20 to implement various types of functional components, or causing the TV conference-specific terminals 10 or the mobile terminals 20 to function as various types of components, and to transmit the terminal-specific programs to the TV conference-specific terminals 10 or the mobile terminals 20. Note that the TV conference-specific terminals 10 and the mobile terminals 20 are configured to transmit different terminal programs. Specifically, the program providing system 90 is configured to transmit terminal-specific programs for utilizing the TV conference service to the TV conference-specific terminals 10, while transmitting terminal-specific programs for utilizing the TV conference service and the text chat service to the mobile terminals 20. Note that the program providing system 90 may alternatively be configured to transmit the terminal-specific programs for utilizing the text chat service alone to the mobile terminals 20.

The HD 304 of the program providing system 90 is configured to further store relay apparatus-specific programs for causing the relay apparatuses 30 to implement various types of functional components, or causing the relay apparatuses 30 to function as various types of components, and to transmit the relay apparatus-specific programs to the relay apparatuses 30. The HD 304 of the program providing system 90 is configured to further store transmission management programs for causing the transmission management systems 50 to implement various types of functional components, or causing the transmission management systems 50 to function as various types of components, and to transmit the transmission management programs to the transmission management systems 50. The HD 304 of the program providing system 90 is configured to further store information management programs for causing the common information management apparatus 60 to implement various types of functional components, or causing the common information management apparatus 60 to function as various types of components, and to transmit the information management programs to the common information management apparatus 60.

The maintenance system 100 is a computer configured to perform maintenance, management, or support on at least one of the TV conference-specific terminals 10, the mobile terminals 20, the relay apparatuses 30, the transmission management systems 50, the common information management apparatus 60, and the program providing system 90. For example, when the maintenance system 100 is located domestically, and the TV conference-specific terminals 10, the mobile terminals 20, the relay apparatuses 30, the transmission management systems 50, the common information management apparatus 60, and the program providing system 90 are located abroad, the maintenance system 100 remotely performs maintenance, management, support, and the like on one or more of the TV conference-specific terminals 10, the mobile terminals 20, the relay apparatuses 30, the transmission management systems 50, the common information management apparatus 60, and the program providing system 90 via the communications network 2. The maintenance system 100 may further perform maintenance such as the management of model numbers, manufacturer's serial numbers, customers, maintenance and inspection, the malfunction history, and the like on one or more of the TV conference-specific terminals 10, the mobile terminals 20, the relay apparatuses 30, the transmission management systems 50, the common information management apparatus 60, and the program providing system 90 without being mediated by the communication network 2.

The TV conference-specific terminals (10aa, 10ab, 10ac, ......), the relay apparatus 30a, and the router 70a are connected to one another via a LAN 2a such that the TV conference-specific terminals (10aa, 10ab, 10ac, ......), the relay apparatus 30a, and the router 70a may be in communications with one another. The TV conference-specific terminals (10ba, 10bb, 10bc, ......), the relay apparatus 30b, and the router 70b are connected to one another via a LAN 2b such that the TV conference-specific terminals (10ba, 10bb, 10bc, ......), the relay apparatus 30b, and the router 70b may be in communications with one another. Moreover, the LAN 2a and the LAN 2b are connected via a dedicated line 2ab including a router 70ab such that the LAN 2a and the LAN 2b may be in communications with each other. The LAN 2a and the LAN 2b are constructed within a predetermined area A. For example, the predetermined area A may be Japan, the LAN 2a may be constructed within a Tokyo Office, and the LAN 2b may be constructed within an Osaka Office. The mobile terminals (20aa, 20ab, ...) are utilized in the area A.

The TV conference-specific terminals (10ca, 10cb, 10cc, ......), the relay apparatus 30c, and the router 70c are connected to one another via a LAN 2c such that the TV conference-specific terminals (10ca, 10cb, 10cc, ......), the relay apparatus 30c, and the router 70c may be in communications with one another. The TV conference-specific terminals (10da, 10db, 10dc, ......), the relay apparatus 30d, and the router 70d are connected to one another via a LAN 2d such that the TV conference-specific terminals (10da, 10db, 10dc, ......), the relay apparatus 30d, and the router 70d may be in communications with one another. The LAN 2c and the LAN 2d are connected via a dedicated line 2cd including a router 70cd such that the LAN 2c and the LAN 2d may be in communications with each other. The LAN 2c and the LAN 2d are constructed within a predetermined area B. For example, the predetermined area B may be the United States of America, the LAN 2c may be constructed within a NY Office, and the LAN 2d may be constructed within a Washington, D.C. Office. The mobile terminals (20ba, 20bb, ...) are utilized in the area B.

The area A and the area B are connected via the Internet 2i from the routers 70ab and 70cd, respectively, such that the area A and the area B may be in communications with each other.

Note that the TV conference-specific terminals 10 are not necessarily connected by a dedicated line, and may be directly connected to the Internet 2i.

In addition, the transmission management systems 50, the program providing system 90, and the maintenance system 100 are connected via the Internet 2i to the TV conference-specific terminals 10, the mobile terminals 20, the relay apparatuses 30, and the common information management apparatus 60 such that the transmission management systems 50, the program providing system 90, and the maintenance system 100 may be in communications with the TV conference-specific terminals 10, the mobile terminals 20, the relay apparatuses 30, and the common information management apparatus 60. The transmission management systems 50, the common information management apparatus 60, and the program providing system 90 may be installed within the area A or the area B, or may be installed within an area other than these areas A and B.

Note that the LAN 2a, the LAN 2b, the dedicated line 2ab, the Internet 2i, the dedicated line 2cd, the LAN 2c, and the LAN 2d form the communications network 2 in this embodiment. The communications network 2 not only includes wired communications but partially includes wireless communications such as WiFi (Wireless Fidelity) or Blue-tooth (registered trademark).

In FIG. 1, a combination of four numbers noted beneath each of the TV conference-specific terminals 10, the mobile terminals 20, the relay apparatuses 30, the transmission management systems 50, the common information management apparatus 60, the routers 70, the program providing system 90, and the maintenance system 100 simply represents an IP address using IPv4. For example, the IP address of the TV conference-specific terminal 10aa is "1.2.1.3". The IP address may be IPv6 instead of IPv4; however, the IPv4 is employed in this specification for simplifying the illustration.

Note that each of the TV conference-specific terminals 10 and the mobile terminals 20 may be used for communications between two or more offices, and communications between different rooms within the same office, in addition to communications within the same room, communications between indoor and outdoor, and communications between outdoor and outdoor. The TV conference-specific terminals 10 and the mobile terminals 20 when used outdoor may perform communications via wireless communications such as a mobile communications network.

### HARDWARE CONFIGURATION

The following describes hardware system components according to an embodiment.

### TV CONFERENCE-SPECIFIC TERMINAL

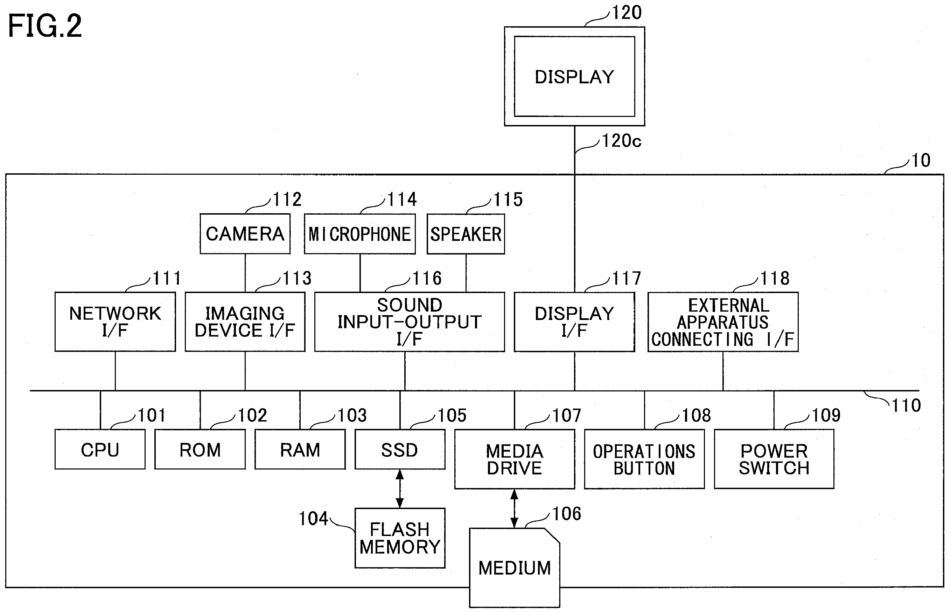

The following specifically illustrates a hardware configuration of the TV conference-specific terminal 10. FIG. 2 is a hardware configuration diagram illustrating a TV conference-specific terminal according to an embodiment. As illustrated in FIG. 2, the TV conference-specific terminal 10 includes a CPU (central processing unit) 101 controlling operations of the entire TV conference-specific terminal 10, a ROM (read only memory) 102 storing programs for driving the CPU 101 such as initial program loader (IPL), a RAM (random access memory) 103 serving as a work area of the CPU 101, a flash memory 104 storing various types of data such as terminal programs, image data, and sound data, an SDD (solid state drive) 105 controlling reading or writing of various types of data with respect to the flash memory 104 based on the control of the CPU 101, a media drive 107 controlling reading or writing (storing) of data with respect to a recording medium 106 such as a flash memory, an operations button 108 to be operated when selecting a destination of the TV conference-specific terminal 10, a power switch 109 to switch ON/OFF of the power supply of the TV conference-specific terminal 10, and a network I/F (interface) 111 for transmitting data via the communications network 2.

The TV conference-specific terminal 10 further includes a built-in camera 112 configured to image a subject to acquire image data in accordance with the control of the CPU 101, an imaging device I/F 113 configured to control the drive of the camera 112, a built-in microphone 114 configured to input sound, a built-in speaker 115 configured to output sound, a sound input-output I/F 116 configured to process input and output of sound signals between the microphone 114 and the speaker 115 in accordance with the control of the CPU 101, a display I/F 117 configured to transmit image data to an externally attached display 120 in accordance with the control of the CPU 101, an external apparatus connecting I/F 118 for connecting various types of external apparatuses, and a bus line 110 such as an address bus or a data bus for electrically connecting the above-described components illustrated in FIG. 2.

The display 120 is a display part formed of liquid crystal or organic EL (OLED), and configured to display an image of the subject or operational icons. The display 120 is connected to the display I/F 117 via a cable 120c. The cable 120c may be an analog RGB (VGA) signal-specific cable, a component video-specific cable, an high-definition multimedia interface (HDMI) (registered trademark) or a DVI (digital video interactive) signal-specific cable.

The camera 112 includes lenses or a solid-state image sensor configured to convert an image (video) of a subject into electronic data by converting light waves into electric charges. Examples of the solid-state image sensor include a CMOS (complementary metal oxide semiconductor) and a CCD (charge coupled device).

The external apparatus connecting I/F 118 is configured to be connected via a USB (universal serial bus) to external apparatuses such as an external camera, an external microphone, and an external speaker. When the external camera is connected to the external apparatus connecting I/F 118, the external camera is driven in preference to the built-in camera 112 in accordance with the control of the CPU 101. Similarly, when the external microphone or the external speaker is connected to the external apparatus connecting I/F 118, the external microphone or the external speaker connected to the external apparatus connecting I/F 118 is driven in preference to a corresponding one of the built-in microphone 114 and the built-in speaker 115 in accordance with the control of the CPU 101. Note that the TV conference-specific terminal 10 is not necessarily provided with the built-in camera 112, and may be connected to the external camera alone via the external apparatus connecting I/F 118. Similarly, the TV conference-specific terminal 10 is not necessarily provided with the built-in microphone 114 or the built-in speaker 115, and may be connected to the external microphone or the external speaker alone via the external apparatus connecting I/F 118. The display 120 of the TV conference-specific terminal 10 is connected to the display I/F 117 via a cable 120c, but is not necessarily connected to the display I/F 117. The display 120 may be incorporated in the TV conference-specific terminal 10.

The TV conference-specific terminal 10 may be provided with an external recording medium I/F configured to read an external recording medium such as an SD card or SIM (subscriber identity module) card in addition to the external apparatus connecting I/F 118.

Note that the recording medium 106 is configured to be removable from the TV conference-specific terminal 10. When the recording medium 106 is a nonvolatile memory configured to read or write data in accordance with the control of the CPU 101, such a nonvolatile memory is not limited to the flash memory 104. The nonvolatile memory to be used may be an EEPROM (Electrically Erasable and Programmable ROM), or the like.

The above-described terminal-specific programs may be distributed in a form of a computer-readable recording medium, such as the recording medium 106, or the like storing the programs in files of an installable format or an executable format. Alternatively, the above-described terminal-specific programs may be stored in the ROM 102 instead of the flash memory 104.

### MOBILE TERMINAL

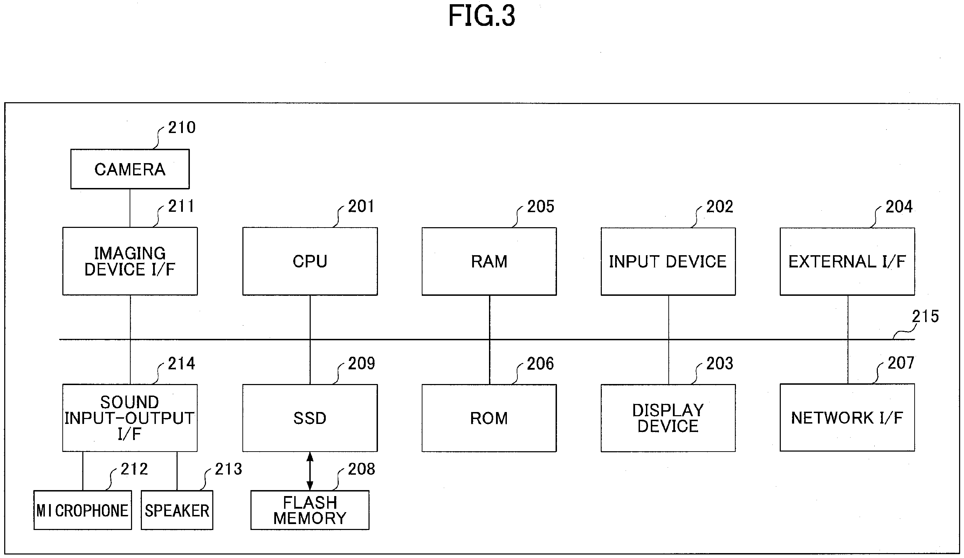

FIG. 3 is a hardware configuration diagram illustrating an example of the mobile terminal according to an embodiment. As illustrated in FIG. 3, the mobile terminal 20 according to the embodiment includes a CPU 201 configured to control overall operations of the mobile terminal 20, an input device 202 configured to input various types of signals into the mobile terminal 20, a display device 203 configured to display a process result obtained by the mobile terminal 20, an external I/F 204 serving as an interface between various types of external apparatuses such as an external microphone, an external camera, and an external recording medium, and the mobile terminal 20, a RAM 205 utilized as a work area of the CPU 201, a ROM 206 configured to store programs and data such as settings of the OS of the mobile terminal 20 and network settings, a network I/F 207 configured to transmit data by utilizing a mobile phone communications network, a flash memory 208 configured to store various types of data such as terminal-specific programs, and an SSD 209 configured to control reading or writing of various types of data with respect to the flash memory 208 in accordance with the control of the CPU 201.

The mobile terminal 20 further includes a built-in camera 210 configured to image a subject to acquire image data in accordance of the control of the CPU 201, an imaging device I/F 211 configured to control driving of the camera 210, a built-in microphone 212 configured to input sound, a built-in speaker 213 configured to output sound, a sound input-output I/F 214 configured to input/output of sound signals between the microphone 212 and the speaker 213 in accordance with the control of the CPU 201, and a bus line such as an address bus or a data bus configured to electrically connect the above-described components as illustrated in FIG. 3. Note that when the mobile terminal 20 utilizes a text chat service alone, the mobile terminal 20 is not necessarily provided with the camera 210, the microphone 212, the speaker 213, and the like.

When the recording medium 106 is a nonvolatile memory configured to read or write data in accordance with the control of the CPU 101, the recording medium 106 is not limited to the flash memory 208. The recording medium 106 may be an EEPROM (electrically erasable and programmable ROM) or the like.

The above-described terminal-specific programs may be distributed in a form of a computer-readable recording medium, such as a recording medium, or the like recording the programs in files of an installable format or an executable format. Alternatively, the above-described terminal-specific programs may be stored in the ROM 206 instead of the flash memory 208.

### RELAY APPARATUS, TRANSMISSION MANAGEMENT SYSTEM, COMMON INFORMATION MANAGEMENT APPARATUS, PROGRAM PROVIDING SYSTEM, AND MAINTENANCE SYSTEM

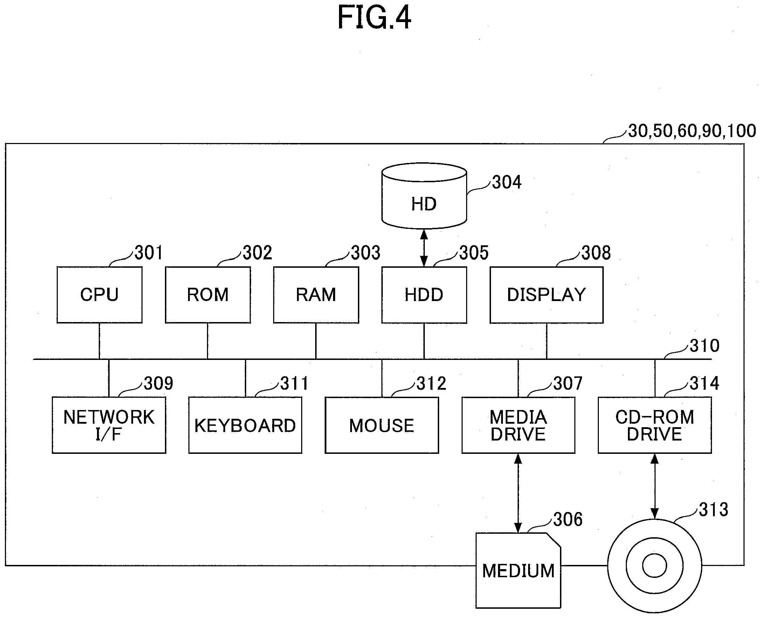

The following describes hardware configurations of the relay apparatus 30, the transmission management system 50, the common information management apparatus 60, the program providing system 90, and the maintenance system 100. FIG. 4 is a hardware configuration diagram of the relay apparatus 30, the transmission management system 50, the common information management apparatus 60, the program providing system 90, and the maintenance system 100 according to an embodiment.

The transmission management system 50 includes a CPU 301 configured to control overall operations of the transmission management system 50, a ROM 302 configured to store a program for use in driving the CPU 301 such as an IPL (Initial Program Loader), a RAM 303 configured to serve as a work area of the CPU 301, the HD 304 configured to store data tailored for programs of the transmission management system 50, an HDD (hard disk drive) 305 configured to control reading or writing of the data with respect to the HD 304 in accordance of the control of the CPU 301, a media drive 307 configured to control reading or writing (storing) of data with respect to a recording medium 306 such as flash memory or the like, a display 308 configured to display various types of information such as a cursor, menus, windows, characters, or images, a network I/F 309 configured to perform data communications using the communications network 2, a keyboard 311 provided with multiple keys for inputting characters, numeric values, various types of instructions, and the like, a mouse 312 configured to select or execute various types of instructions, select a process target, and move a cursor, a CD-ROM drive 314 configured to control reading or writing of data with respect to a CD-ROM (compact disc read only memory) as an example of a removable recording medium, and a bus line 310 such as an address bus or a data bus for electrically connecting the above-described components as illustrated in FIG. 4.

Note that the above-described transmission management-specific programs may be distributed in a form of the above-described computer-readable recording medium 306, the CD-ROM 313, or the like storing the programs in files of an installable format or executable format. Alternatively, the above-described transmission management-specific programs may be stored in the ROM 302 instead of the HD 304.

Each of the relay apparatus 30 and the common information management apparatus 60 has a hardware configuration similar to that of the transmission management system 50, and hence, a duplicated illustration of the relay apparatus 30 and the common information management apparatus 60 is omitted from the specification. However, the HD 304 of the relay apparatus 30 stores relay apparatus-specific programs for controlling the relay apparatus 30, and the HD 304 of the common information management apparatus 60 stores information management-specific programs for controlling the common information management apparatus 60. In this case, the relay apparatus-specific programs and the information management-specific programs may be distributed in a form of the above-described computer-readable recording medium 306, CD-ROM 313, or the like storing the programs in files of an installable format or executable format. Alternatively, the above-described relay apparatus-specific programs and the information management-specific programs may be stored in the ROM 302 instead of the HD 304.

Each of the program providing system 90 and the maintenance system 100 has a hardware configuration similar to that of the transmission management system 50, and hence, a duplicated illustration of the program providing system 90 and the maintenance system 100 is omitted from the specification. Note that the HD 304 of the program providing system 90 stores program providing-specific programs for controlling the program providing system 90. In this case, the program providing-specific programs may also be distributed in a form of the above-described computer-readable recording medium 306, the CD-ROM 313, or the like storing the programs in files of an installable format or executable format. Alternatively, the above-described program providing-specific programs may be stored in the ROM 302 instead of the HD 304.

Note that other examples of the removable computer-readable recording medium include a CD-R (compact disc recordable), a DVD (digital versatile disk), a Blu-ray Disc, and the like.

### FUNCTIONAL CONFIGURATION OF TRANSMISSION SYSTEM

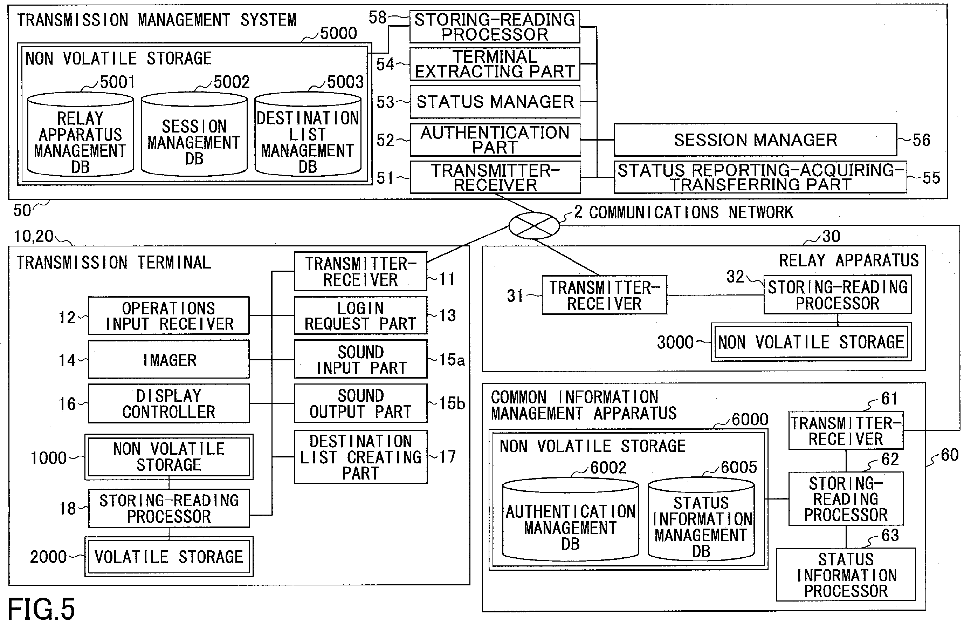

The following illustrates functional configurations of system components according to an embodiment. FIG. 5 is a functional block diagram illustrating the terminals, the apparatus, and the system constituting the transmission system according to the embodiment. In FIG. 5, the TV conference-specific terminal 10, the mobile terminal 20, the relay apparatus 30, the transmission management system 50, and the common information management apparatus 60 are connected via the communications network 2 to perform data communications with one another. Note that the program providing system 90, and the maintenance system 100 illustrated in FIG. 1 are omitted from FIG. 5 because these components are not directly associated with the embodiment.

### FUNCTIONAL CONFIGURATION OF TERMINAL

The TV conference-specific terminal 10 includes a transmitter-receiver 11, an operations input receiver 12, a login request part 13, an imager 14, a sound input part 15a, a sound output part 15b, a display controller 16, a destination list creating part 17, and a storing-reading processor 18. In the following, a description is mainly given of a case in which the TV conference-specific terminal 10 serves as the transmission terminal illustrated in FIG. 5.

The above-described components are functional components or functional parts implemented by causing any one of the components illustrated in FIG. 2 to operate based on instructions from the CPU 101 in accordance with the terminal-specific programs loaded from the flash memory 104 in the RAM 103.

Further, the TV conference-specific terminal 10 includes a volatile storage 2000 formed of the RAM 103 illustrated in FIG. 2, and a nonvolatile storage 1000 formed of the flash memory 104 illustrated in FIG. 2.

Next, a detailed description is given of a functional configuration of the TV conference-specific terminal 10 with reference to FIGS. 2 and 5. Note that in the following, an illustration is also given of a relationship with main components of the TV conference-specific terminal 10, among the components illustrated in FIG. 2, for implementing the respective functional components of the TV conference-specific terminal 10.

The transmitter-receiver 11 of the transmission terminal (TV conference-specific terminal) 10 illustrated in FIG. 5 is implemented by instructions from the CPU 101 illustrated in FIG. 2, and the network I/F 111 illustrated in FIG. 2, and configured to perform transmission and reception of various types of data (or information) with respect to other terminals, apparatuses, or systems via the communications network 2. The transmitter-receiver 11 starts receiving status information indicating a status of each of the transmission terminals serving as destination candidates from the TV conference management system 50₁ before starting communications with a desired destination terminal. Note that the status information not only includes operating statuses (online or offline) of the TV conference-specific terminals 10 and/or the mobile terminals 20, but also includes a detailed status, that is, "presence" indicating, for example, whether the user of each terminal is currently speaking, or is currently away from the user's seat even when the operating status is online. Further, this status information also includes various statuses such as the cable 120c being disconnected from the TV conference-specific terminal 10, and sound being output while image display is disabled, or sound output being disabled (mute). In the above example, when the transmission terminal in FIG. 5 is the mobile terminal 20, the transmitter-receiver 11 starts receiving the status information indicating the status of each of the terminals serving as the destination candidates from the text chat management system 50₂ before starting the communications with a desired destination terminal.

The operations input receiver 12 of the terminal 10 illustrated in FIG. 5 is implemented by the instructions from the CPU 101 illustrated in FIG. 2, the operations button 108 and the power switch 109 illustrated in FIG. 2, and is configured to receive various types of inputs from users. For example, when the user switches the power switch 109 illustrated in FIG. 2 ON, the operations input receiver 12 illustrate in FIG. 5 receives a power ON instruction to switch the power ON. Note that when the transmission terminal in FIG. 5 is the mobile terminal 20, the operations input receiver 12 is implemented by instructions from the CPU 101, and the input device 202.

The login request part 13 of the transmission terminal 10 illustrated in FIG. 5 is implemented by the CPU 101 illustrated in FIG. 2, and is configured to automatically transmit login request information representing an indicating to request a login, terminal type information, names of services available to the request source terminal, and a current IP address of the request source terminal from the transmitter-receiver 11 to the TV conference management system 50₁ via the communications network 2, which is triggered upon the reception of the power ON instruction. Further, when the user switches the power switch 109 from a power ON status to a power OFF status, the operations input receiver 12 completely switches the power OFF after the transmitter-receiver 11 transmits status information indicating that the power will be switched OFF to the TV conference management server 50₁. The management system 50₁ may thus be able to detect change in the power status of the TV conference-specific terminal 10 from the power ON status to the power OFF status. In the above example, when the transmission terminal in FIG. 5 is the mobile terminal 20, the login request part 13 is implemented by instructions from the CPU 201, and is configured to transmit login request information representing an indication to request a login, and a current IP address of the request source terminal from the transmitter-receiver 11 to the text chat management system 50₂ via the communications network 2, which is triggered upon the reception of the login operation performed by the user of the mobile terminal 20. In the mobile terminal 20, the login request and the like are transmitted to the text chat management system 50₂ by the user's login operation on the programs (terminal-specific programs) installed in the mobile terminal 20.

The imager 14 of the transmission terminal 10 illustrated in FIG. 5 is implemented by instructions from the CPU 101 illustrated in FIG. 2, the camera 112 and the imaging device I/F 113 illustrated in FIG. 2, and is configured to image a subject to acquire image data of the subject and output the acquired image data. Note that when the transmission terminal in FIG. 5 is the mobile terminal 20, the imager 14 is implemented by instructions from the CPU 201 illustrated in FIG. 3, the camera 210 and the imaging device I/F 211 illustrated in FIG. 3. However, when the mobile terminal 20 uses the text chat service alone, the mobile terminal 20 does not necessarily have the imager 14.

The sound input part 15a of the terminal 10 illustrated in FIG. 5 is implemented by the instructions from the CPU 101 illustrated in FIG. 2 and the sound input-output I/F 116 illustrated in FIG. 2, and is configured to convert voice input by the user via the microphone 114 into sound signals to input sound data associated with the sound signals. The sound output part 15b of the transmission terminal 10 illustrated in FIG. 5 is implemented by the instructions from the CPU 101 illustrated in FIG. 2 and the sound input-output I/F 116 illustrated in FIG. 2, and is configured to output the sound signals associated with the sound data to the speaker 115 to cause the speaker 115 to output voice. Note that when the transmission terminal in FIG. 5 is the mobile terminal 20, the sound input part 15a and the sound output part 15b are implemented by instructions from the CPU 201 illustrated in FIG. 3, and the sound input-output I/F 211 illustrated in FIG. 3. However, when the mobile terminal 20 uses the text chat service alone, the mobile terminal 20 does not necessarily have the sound input part 15a and the sound output part 15b.

The display controller 16 of the transmission terminal 10 illustrated in FIG. 5 is implemented by the instructions from the CPU 101 illustrated in FIG. 2 and the display I/F 117 illustrated in FIG. 2, and is configured to control transmission of image data with respect to an externally attached display 120. Note that when the transmission terminal in FIG. 5 is the mobile terminal 20, the display controller 16 is implemented by instructions from the CPU 201 illustrated in FIG. 3, and the display device 203 illustrated in FIG. 3, and is configured to control transmission of image data or the like with respect to the display device 203.

The destination list creating part 17 of the transmission terminal 10 illustrated in FIG. 5 is implemented by instructions from the CPU 101 illustrated in FIG. 2, and is configured to create or update destination lists based on destination list information and status information of the TV conference-specific terminals 10 and/or the mobile terminals 20 serving as the destination candidates received from the transmission management system 50. Note that when the transmission terminal in FIG. 5 is the mobile terminal 20, the destination list creating part 17 is implemented by the CPU 201 illustrated in FIG. 3.

The storing-reading processor 18 of the transmission terminal 10 illustrated in FIG. 5 is implemented by instructions from the CPU 101 illustrated in FIG. 2, and the SDD 105 illustrated in FIG. 2, and is configured to store various types of data in a nonvolatile storage 1000 and read various types of data from the nonvolatile storage 1000. The nonvolatile storage 1000 is configured to store a communications ID (identification) and a password corresponding to the communications ID for identifying a terminal or a user of a TV conference-specific terminal 10 as a communications destination. Note that the communications ID and the corresponding password are not necessarily stored in the nonvolatile storage 1000, and the communications ID and the corresponding password may be input by the user every time the user transmits a login request to the transmission management system 50.

The storing-reading processor 18 is further configured to store various types of data in a volatile storage 2000, and read various types of data from the volatile storage 2000. The volatile storage 2000 stores image data or sound data, and overwrites the stored image data or sound data every time the volatile storage 2000 receives the image data or sound data by performing communications with the destination terminal. Among these data, images based on the image data before being overwritten are displayed on the display 120, and sounds based on the sound data before being overwritten are output from the speaker 150. In the above example, when the transmission terminal in FIG. 5 is the mobile terminal 20, the storing-reading processor 18 is implemented by instructions from the CPU 201 illustrated in FIG. 3, and the SSD 209 illustrated in FIG. 3. The volatile storage 2000 also stores the text data received by performing a text chat with the destination terminal.

The communications IDs or the later-described relay apparatus IDs of the embodiment indicate identification information such as languages, characters, symbols, or various types of marks used for uniquely identifying the transmission terminals or users of the transmission terminals as well as the relay apparatuses 30. Further, the communications IDs and the relay apparatus IDs may be identification information composed of a combination of at least two combinations of the above languages, characters, symbols, and marks.

### FUNCTIONAL CONFIGURATION OF RELAY APPARATUS

The relay apparatus 30 includes a transmitter-receiver 31, and a storing-reading processor 32. The above-described components are functional components or functional parts implemented by causing any one of the components illustrated in FIG. 4 to operate on instructions from the CPU 301 in accordance with the relay apparatus programs loaded from the HD 304 in the RAM 303. The relay apparatus 30 further includes a nonvolatile storage 3000 configured to maintain various types of data (or information) stored even though the power of the relay apparatus 30 is switched OFF. The nonvolatile storage 3000 is formed of the HD 304 illustrated in FIG. 4.

Next, detailed illustration is given of functional configurations of the relay apparatus 30. Note that in the following, an illustration is also given of a relationship with main components illustrated in FIG. 4 for implementing the relay apparatus 30.

The transmitter-receiver 31 of the relay apparatus 30 illustrated in FIG. 5 is implemented by the instructions from the CPU 301 illustrated in FIG. 4 and the network I/F 309 illustrated in FIG. 4, and is configured to perform transmission and reception of various types of data (or information) with other terminals, apparatuses, or systems via the communications network 2.

The storing-reading processor 32 of the relay apparatus 30 illustrated in FIG. 5 is implemented by instructions from the CPU 301 illustrated in FIG. 4, and the HDD 305 illustrated in FIG. 4, and is configured to store various types of data in the nonvolatile storage 3000, and read various types of data from the nonvolatile storage 3000. Note that the nonvolatile storage 3000 stores IP addresses and the like of the TV conference-specific terminal 10 and/or the mobile terminal 20 as destinations for relaying the image data.

### FUNCTIONAL CONFIGURATION OF TRANSMISSION MANAGEMENT SYSTEM

The transmission management system 50 includes a transmitter-receiver 51, an authentication part 52, a status manager 53, a terminal extracting part 54, a status reporting-acquiring-transferring part 55, a session manager 56, and a storing-reading processor 58. The above-described components are functional components or functional parts implemented by causing any one of the components illustrated in FIG. 4 to operate on instructions from the CPU 301 in accordance with the management system programs loaded from the HD 304 in the RAM 303. The transmission management system 50 includes a nonvolatile storage 5000 configured to maintain various types of data (or information) stored even though the power of the transmission management system 50 is switched OFF. The nonvolatile storage 5000 is formed of the HD 304 illustrated in FIG. 4.

### RELAY APPARATUS MANAGEMENT TABLE

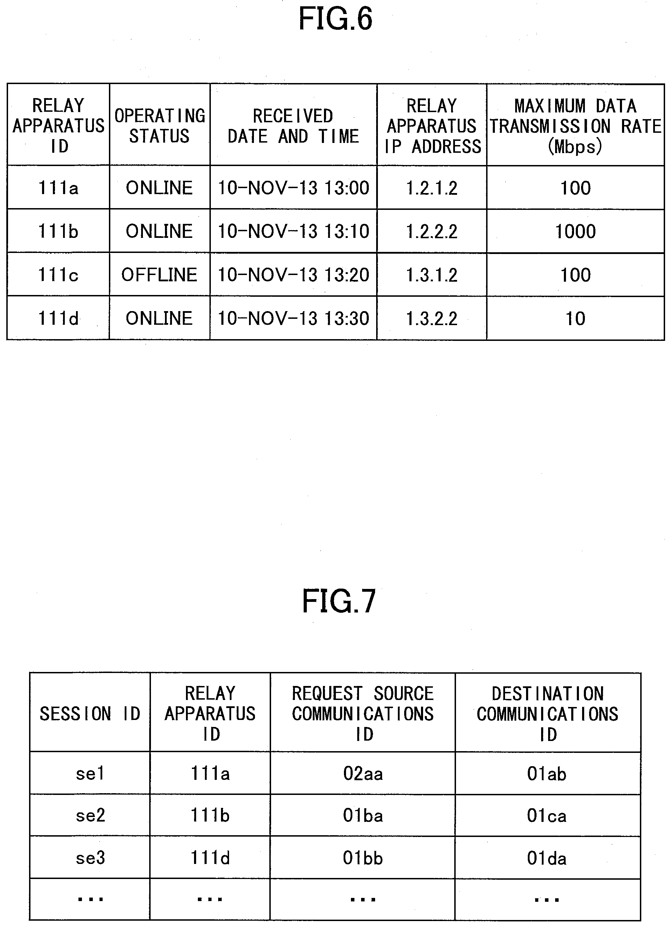

The nonvolatile storage part 5000 includes a relay apparatus management database (DB) 5001 composed of a relay apparatus management table illustrated in FIG. 6. The relay apparatus management table is designed to manage operations statuses of the relay apparatuses 30, received dates and times of the status information indicating the operation statuses received by the transmission management system 50, IP addresses of the relay apparatuses 30, and the maximum data transmission rates (Mbps) of the relay apparatuses 30 in association with respective relay apparatus IDs for identifying the relay apparatuses 30. For example, in the relay apparatus management table illustrated in FIG. 6, the relay apparatus 30a having the relay apparatus ID "111a" is in an operation status indicating "online", date and time of the status information received by the transmission management system 50 indicate "10-Nov-16 13:00 (November 10, 2013, 13:00)", the IP address of the relay apparatus 30a indicates "1.2.1.2", and the maximum data transmission rate indicates "100 Mbps". Each of the transmission management systems 50 manages available (accessible) relay apparatuses 30 as described above. More specifically, the TV conference management system 50₁ manages a relay apparatus management table of the relay apparatuses 30 available for use in the TV conference service whereas the text chat management system 50₂ manages a relay apparatus management table of the relay apparatuses 30 available for use in the TV conference service and the text chat service. Note that the text chat service handles text data; and hence, data may directly be transmitted or received between request source terminals and destination terminals, or data may be transmitted or received via the transmission management system 50. Note that the relay apparatus management DB 5001 and the later described session management DB 5002 may be constructed in the common information management apparatus 60. Such a configuration may enable all the transmission management systems 50 to share (use) the relay apparatus management information and the session management information.

### SESSION MANAGEMENT TABLE

The nonvolatile storage 5000 includes a session management DB 5002 composed of a session management table illustrated in FIG. 7. The session management table is designed to manage each of the session IDs for use in execution of a session for selecting a desired one of the relay apparatuses 30 in association with a corresponding one of the relay apparatus IDs of the relay apparatuses 30 used for relaying data, a corresponding one of the communications IDs of the request source terminals, and a corresponding one of the communications IDs of the destination terminals. In the session management table illustrated in FIG. 7, for example, the relay apparatus 30a (the relay apparatus ID "111a") selected by the session ID "se1" relays data between the request source terminal (the mobile terminal 02aa) having the communications ID "02aa" and the destination terminal (the TV conference-specific terminal 10ab) having the communications ID "01ab".

### DESTINATION LIST MANAGEMENT TABLE

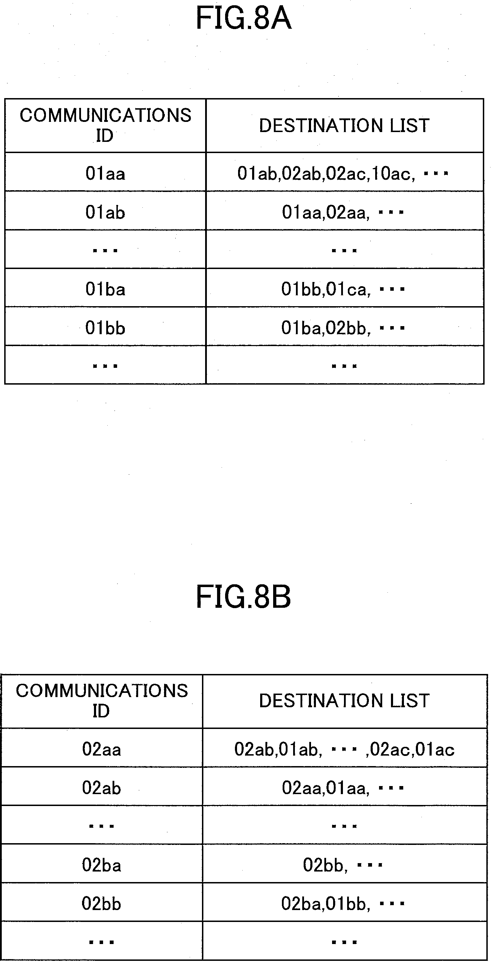

The nonvolatile storage 5000 also includes a destination list management DB 5003 composed of destination list management tables illustrated in FIGS. 8A and 8B. FIG. 8A is an example of the destination list management table that registers destination information managed by the TV conference management system 50₁. FIG. 8B is an example of the destination list management table that registers destination information managed by the text chat management system 50₂. These destination list management tables are designed to manage the communications ID of the request source terminal that has requested starting (calling) the connection in the TV conference service or the text chat service in association with all the communications IDs of the destination terminals registered as destination terminal candidates. The destination list management table managed by the TV conference management system 50₁ illustrated in FIG. 8A, for example, indicates that destination terminal candidates to which the request source terminal (the TV conference-specific terminal 10aa) having the communications ID "01aa" may be able to transmit a connection start request using the TV conference service include the destination terminal candidates having the communications ID "01ab", "02ab", "02ac", "10ac", and the like managed by the TV conference management system 50₁.

On the other hand, the destination list management table managed by the text chat management system 50₂ illustrated in FIG. 8B, for example, indicates that destination terminal candidates to which the request source terminal (the mobile terminal 20aa) having the communications ID "02ab" may be able to transmit a connection start request using the text chat service include the destination terminal candidates having the communications ID "02aa", "01aa", and the like managed by the text chat management system 50₂.

Next, a detailed illustration is given of respective functional components of the transmission management system 50. Note that in the following, an illustration is also given of a relationship with main components illustrated in FIG. 4 for implementing the functional components of the transmission management system 50.

The transmitter-receiver 51 of the transmission management system 50 illustrated in FIG. 5 is implemented by instructions from the CPU 301 illustrated in FIG. 4 and the network I/F 309 illustrated in FIG. 4, and is configured to perform transmission and reception of various types of data (or information) with respect to other terminals, apparatuses, or systems via the communications network 2.

The authentication part 52 of the transmission management system 50 illustrated in FIG. 5 is implemented by instructions from the CPU 301 illustrated in FIG. 4 and the network I/F 309 illustrated in FIG. 4, and is configured to search the authentication management DB 6002 of the common information management apparatus 60 by the communications ID and the password included in the login request information received via the transmitter-receiver 51 as search keys, and perform authentication by determining whether the authentication management DB 6002 manages the communications ID and the password identical to those included in the login request information.

The status manager 53 of the transmission management system 50 illustrated in FIG. 5 is implemented by instructions from the CPU 301 illustrated in FIG. 4, and is configured to manage the presence of the request source terminals that have transmitted the login request by storing the presence of the request source terminals in association with the respective communications IDs and the like of the request source terminals in the status information management DB 6005 of the common information management apparatus 60.

The terminal extracting part 54 of the transmission management system 50 illustrated in FIG. 5 is implemented by instructions from the CPU 301 illustrated in FIG. 4, is configured to search the destination list management DB 5003 by the communications ID of the request source terminal that has transmitted the login request as a key, and read the communications IDs of the destination terminal candidates capable of being connected to the request source terminal, and information about the transmission management system 50 that manages calling control of the transmission terminals having the read communications IDs.

The status reporting-acquiring-transferring part 55 of the transmission management system 50 illustrated in FIG. 5 is implemented by instructions from the CPU 301 illustrated in FIG. 4, and is configured to acquire the presence of the transmission terminals having the communications IDs managed by the transmission management system 50 itself, among the destination terminal candidates having the communications IDs extracted by the terminal extracting part 54. The status reporting-acquiring-transferring part 55 also reports the received presence of the request source terminal to the terminals serving as the destination candidates. The status reporting-acquiring-transferring part 55 further transfers the presence received from the transmission terminals 10 and 20 to the common information management apparatus 60 as well as displaying and updating the presence of the destination list displayed on the transmission terminals 10 and 20 utilizing the presence information provided by the common information management apparatus 60.

The session manager 56 of the transmission management system 50 illustrated in FIG. 5 is implemented by instructions from the CPU 301 illustrated in FIG. 4, and is configured to manage the session IDs by storing the relay apparatus IDs of the relay apparatuses 30 that relay content data in association with the respective session IDs, the communications IDs of the request source terminals, and the communications IDs of the destination terminals.

The storing-reading processor 58 of the transmission management system 50 illustrated in FIG. 5 is implemented by instructions from the CPU 301 illustrated in FIG. 4 and the HDD 305 illustrated in FIG. 4, and is configured to store various types of data in the nonvolatile storage 5000, and read various types of data from the nonvolatile storage 5000.

### FUNCTIONAL CONFIGURATION OF COMMON INFORMATION MANAGEMENT APPARATUS

The common information management apparatus 60 includes a transmitter-receiver 61, a storing-reading processor 62, and a status information processor 63. The above-described components are functional components or functional parts implemented by causing any one of the components illustrated in FIG. 4 to operate on instructions from the CPU 301 in accordance with the management system programs loaded from the HD 304 in the RAM 303. The common information management apparatus 60 includes a nonvolatile storage 6000 configured to maintain various types of data (or information) stored even though the power of the common information management apparatus 60 is switched OFF. The nonvolatile storage 6000 is formed of the HD 304 illustrated in FIG. 4.

### AUTHENTICATION MANAGEMENT TABLE

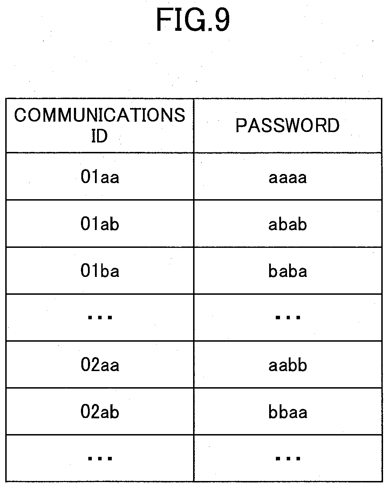

The nonvolatile storage 6000 includes an authentication management DB 6002 composed of an authentication management table illustrated in FIG. 9. The authentication management table in FIG. 9 is designed to manage the communications IDs of the transmission terminals (TV conference-specific terminals 10 and the mobile terminals 20) managed by the transmission management system 50 in association with corresponding passwords. In the terminal authentication management table illustrated in FIG. 9, for example, the communications ID of the TV conference-specific terminal 10aa is "01aa", and the corresponding password is "aaaa".

### STATUS INFORMATION MANAGEMENT DB

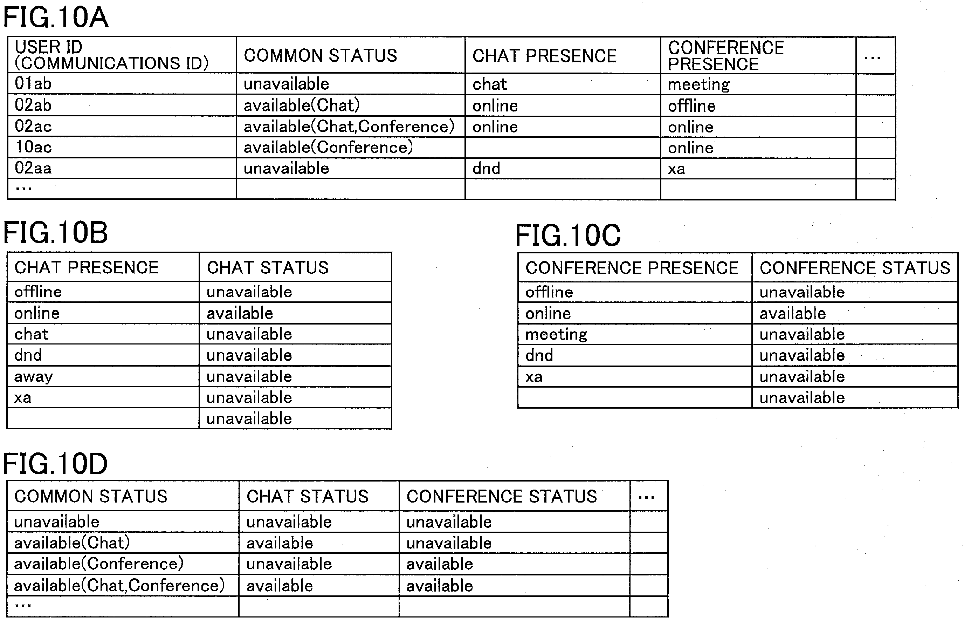

The nonvolatile storage 6000 includes a status information management DB 6005. The status information management DB 6005 includes a presence information table illustrated in FIG. 10A, presence-status correspondence tables illustrated in FIGS. 10B and 10C, and an integrated rule table illustrated in FIG. 10D.

The presence information table of FIG. 10A is designed to associate a common status, a chat presence, a conference presence, and the like with each of the user IDs (communications IDs) common to all the services. To increase a collaborating service, a status of that collaborating service is added.

The common status indicates a status (responsiveness) obtained after integrating statuses (responsiveness) of two or more services. The common status hereinafter is also referred to as an integrated presence. In the common status, "available (Chat, Conference)" indicates that a response may be acquired in both the chat service (Chat) and the TV conference service (Conference). Further, "available (Chat)" indicates that a response may be acquired in the chat service (Chat). Likewise, "available (Conference)" indicates that a response may be acquired in the TV conference service. Further, "unavailable" indicates that no response is acquired from the text chat service or from the TV conference service.

The chat presence is a unique presence in the text chat service. For example, values such as "online", "offline", "chat", "dnd (do not disturb)", "away", and "xa (extended away)" that are allowable in the text chat service may be applied to the chat presence. The definitions of these values representing the chat presence are as follows.

The "online" indicates a status of a terminal that has logged into the text chat service, and is in a standby status of being ready to start communicating with another terminal. The "offline" indicates a status of a terminal that has not logged into the text chat service, and is in an incommunicative status of being not capable of communicating with another terminal. The "chat" indicates a status of a terminal that is in a text chat status of currently performing text chat with another terminal. The "dnd (do not disturb)" indicates a status of a terminal that has logged into the text chat service, and in an execution status of currently executing some other process. In this status, the terminal is not currently in the text chat status of currently performing text chat with another terminal; however, the terminal is unable to start performing text chat due to a currently executing process (currently setting or executing another application). The "away" indicates a status of a terminal that has logged into the text chat service, but the user sets that the user is currently away from the user's seat. The "xa (extended away)" indicates a status of a terminal that has logged into the text chat service, but the user sets that the user is away from the user's seat for a long period.

The conference presence is a unique presence in the TV conference service. For example, values such as "online", "offline", "meeting", "dnd (do not disturb)", "away", and "xa (extended away)" that are allowable in the TV conference service may be applied to the chat presence. The definitions of these values representing the conference presence are as follows.

The "online" indicates a status of a terminal that has logged into the TV conference service, and is in a standby status of being ready to start communicating with another terminal. The "offline" indicates a status of a terminal that has not logged into the TV conference service, and is in an incommunicative status of being not capable of communicating with another terminal. The "meeting" indicates a status of a terminal that is in a TV conference status of currently holding a TV conference with another terminal. The "dnd (do not disturb)" indicates a status of a terminal that has logged into the TV conference service, and in an execution status of currently executing some other process. In this status, the terminal is not currently in the TV conference status of currently holding the TV conference with another terminal; however, the terminal is unable to start holding TV conference due to a currently executing process (currently setting or executing another application). The "away" indicates a status of a terminal that has logged into the TV conference service, but the user sets that the user is currently away from the user's seat. The "xa (extended away)" indicates a status of a terminal that has logged into the TV conference service, but the user sets that the user is away from the user's seat for a long period.

The presence-status correspondence tables illustrated in FIGS. 10B and 10C include a correspondence setting between the presence and the status for each of the services. The "available" indicates that a response is acquired from the text chat service or from the TV conference service, and the "unavailable" indicates that no response is acquired from the text chat service or from the TV conference service. The presence that is blank (has no value) is associated with the "unavailable".

The integrated rule table illustrated in FIG. 10D includes the common status in association with a combination of the chat status and the conference status. The combining number of statuses will be increased when a different service is added.

Next, an illustration is given of functional configurations of the common information management apparatus 60. Note that in the following, an illustration is also given of a relationship with main components among the components illustrated in FIG. 4 for implementing the functional configurations of the common information management apparatus 60.

The transmitter-receiver 61 of the common information management apparatus 60 illustrated in FIG. 5 is implemented by instructions from the CPU 301 illustrated in FIG. 4 and the network I/F 309 illustrated in FIG. 4, and is configured to perform transmission and reception of various types of data (or information) with respect to the transmission management systems 50 via the communications network 2.

The storing-reading processor 62 of the common information management apparatus 60 illustrated in FIG. 5 is implemented by instructions from the CPU 301 illustrated in FIG. 4 and the HDD 305 illustrated in FIG. 4, and is configured to store various types of data in the nonvolatile storage 6000, and read various types of data from the nonvolatile storage 6000.

The status information processor 63 of the common information management apparatus 60 acquires the latest status information (the latest presence information), and provides the transmission management systems 50 with the acquired latest status information (the latest presence information) at a timing at which the transmission management systems 50 in the respective services display and update the destination lists of the transmission terminals 10 and 20, and at a timing at which the transmission management systems 50 receive changes in the status information (presence information) from the transmission terminals 10 and 20.

### DETAILS OF PROCESS

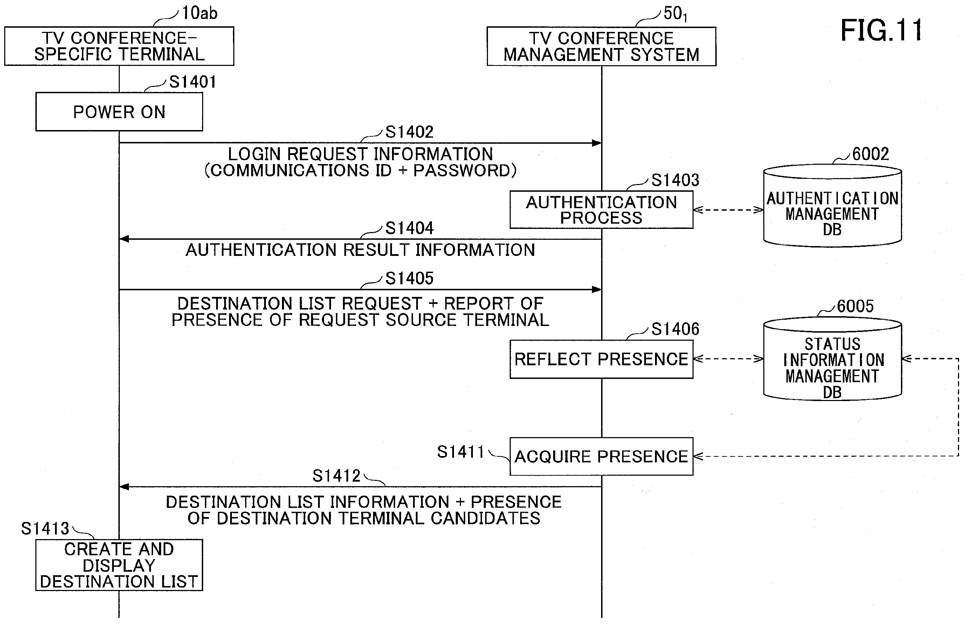

The following illustrates details of the process in the transmission system 1, including the process that does not involve the status information processor 63 and the status information management DB 6005 of the common information management apparatus 60 with reference to FIGS. 11 to 15.

### FROM LOGIN TO DISPLAY OF DESTINATION LIST

In the following, a description is given of a detailed process in which a user operates the TV conference-specific terminal 10aa to display a certain destination list composed of destination terminal candidates with respect to the TV conference-specific terminal 10aa. FIG. 11 is a sequence diagram illustrating an example of a process from a TV conference-specific terminal login step to a destination list display step according to an embodiment.

When the user switches the power switch ON, the operations input receiver 12 illustrated in FIG. 5 receives the power ON to turn the power the TV conference-specific terminal 10aa ON (step S1401). Then, the login request part 13 automatically causes, upon the reception of the power ON as a trigger, the transmitter-receiver 11 to transmit login request information indicating a login request to the TV conference management system 50₁ via the communication network 2 (step S1402). Note that the login request may be transmitted in accordance with input of the user's instruction. This login request information includes a communications ID and a password. The communications ID is configured to identify the TV conference-specific terminal 10aa of the user's own terminal serving as a request source terminal. Note that the communications ID and the password may be read from the nonvolatile storage 1000 via the storing-reading processor 18, or may be input by the user via the operations input receiver 12. Alternatively, the communications ID and the password recorded in an external recording medium may be read via the storing-reading processor 18. Note that when the login request is transmitted from the TV conference-specific terminal 10aa to the TV conference management system 50₁, the TV conference management system 50₁ that receives the login request may be able to detect the IP address of the TV conference-specific terminal 10aa that transmits the login request.

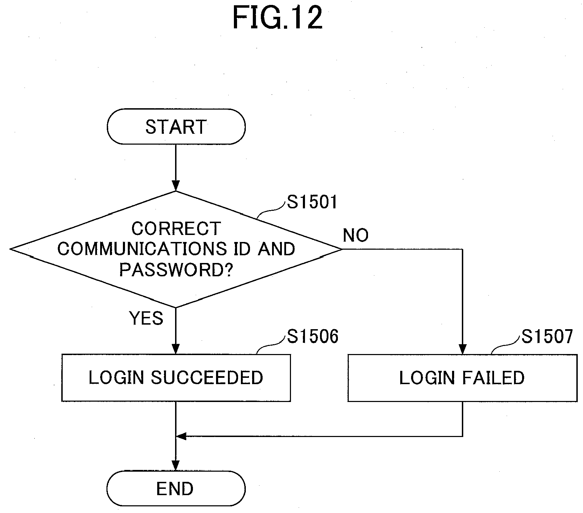

Subsequently, when the authentication part 52 of the TV conference management system 50₁ receives the login request information via the transmitter-receiver 51, the authentication part 52 performs an authentication process (step S1403). The authentication process is described with reference to FIG. 12. FIG. 12 is a flowchart illustrating an example of an authentication process according to an embodiment.

The authentication part 52 of the TV conference management system 50₁ determines whether the authentication management DB 6002 of the common information management apparatus 60 manages a communications ID and password combination identical to the communications ID and password combination included in the login request information (step S1501). In this step, the TV conference management system 50₁ acquires the authentication management table from the authentication management DB 6002 of the common information management apparatus 60 to determine whether the acquired authentication management table manages a communications ID and password combination identical to the communications ID and password combination included in the login request information. Alternatively, the common information management apparatus 60 may determine whether the authentication management DB 6002 (the authentication management table) of the common information management apparatus 60 manages a communications ID and password combination identical to the communications ID and password combination included in the login request information, and the authentication part 52 of the TV conference management system 50₁ may acquire a determination result from the common information management apparatus 60. When it is determined that the authentication management DB 6002 includes the communications ID and password combination identical to the communications ID and password combination included in the login request information, step S1506 is processed to generate an authentication result indicating successful login. On the other hand, when it is determined that the authentication management DB 6002 does not include the communications ID and password combination identical to the communications ID and password combination included in the login request information, step S1507 is processed to generate an authentication result indicating login failure.

The TV conference management system 501 that has received the login request information from the TV conference-specific terminal 10aa thus generates the authentication result indicating successful login based on the communications ID and password included in the login request information.

The illustration of the process continues as follows by referring back to FIG. 11. The transmitter-receiver 51 of the TV conference management system 50₁ transmits the authentication result generated in the authentication process of the step S1403 to the TV conference-specific terminal 10aa (step S1404). In the following, it is assumed that the TV conference management system 50₁ has transmitted the authentication result indicating the successful login to the TV conference-specific terminal 10aa. Note that when the TV conference-specific terminal 10aa receives the authentication information indicating login failure from the TV conference management system 50₁, the TV conference-specific terminal 10aa displays a screen indicating the login failure on the display 120aa of the TV conference-specific terminal 10aa to end the process.

Subsequently, when the transmitter-receiver 11 of the TV conference-specific terminal 10aa receives the authentication result indicating the successful login from the TV conference management system 50₁, the transmitter-receiver 11 of the TV conference-specific terminal 10aa transmits a destination list request and a report of the presence of the TV conference-specific terminal 10aa (step S1405). Note that examples of the report of the presence of the TV conference-specific terminal 10aa include "online (communicative)", "conference in progress (meeting)", and "offline (incommunicative)".

Subsequently, the status manager 53 of the TV conference management system 50₁ changes the presence of the request source terminal (the TV conference-specific terminal 10aa) in the status information management DB 6005 of the common information management apparatus 60 into "online (communicative)" (step S1406).

The status reporting-acquiring-transferring part 55 of the TV conference management system 50₁ acquires the presence of the TV conference-specific terminal TV conference-specific terminal 10ab (the communications ID "01ab") and the like from the status information management DB 6005 of the common information management apparatus 60 (step S1411).

The transmitter-receiver 51 of the TV conference management system 50₁ subsequently transmits destination list information of the request source terminal (the communications IDs and the presence of the destination terminal candidates) to the request source terminal (the TV conference-specific terminal 10aa) (step S1412). In this example, the transmitter-receiver 51 transmits the destination list information of the TV conference-specific terminal 10aa serving as the request source terminal, and the presence of the TV conference-specific terminal 10ab and the like serving as the destination terminal candidates included in the destination list to the TV conference-specific terminal 10aa.

When the destination list creating part 17 of the TV conference-specific terminal 10aa receives the destination list information and the presence of the destination terminal candidates from the TV conference management system 50₁, the destination list creating part 17 creates a destination list and displays the destination list on the display 120aa (step S1413).

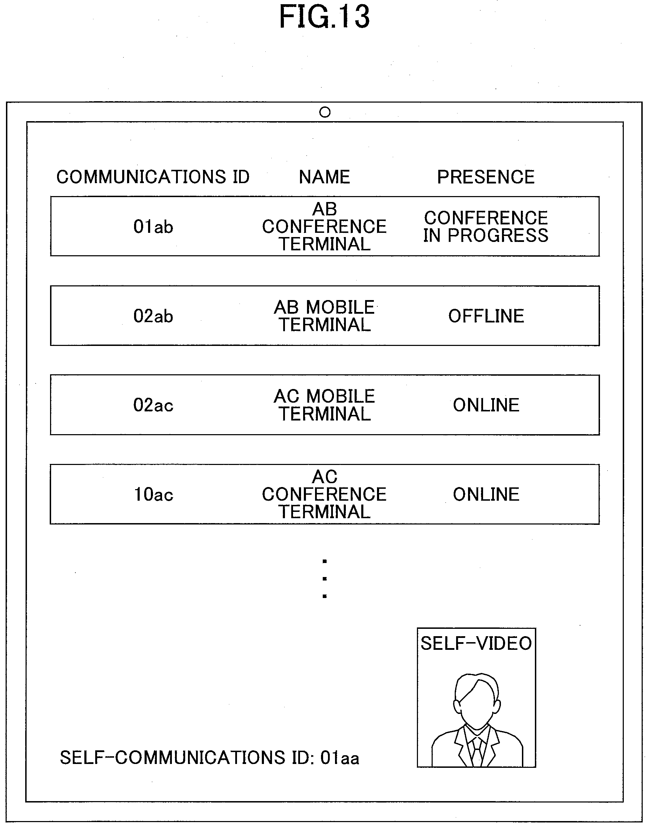

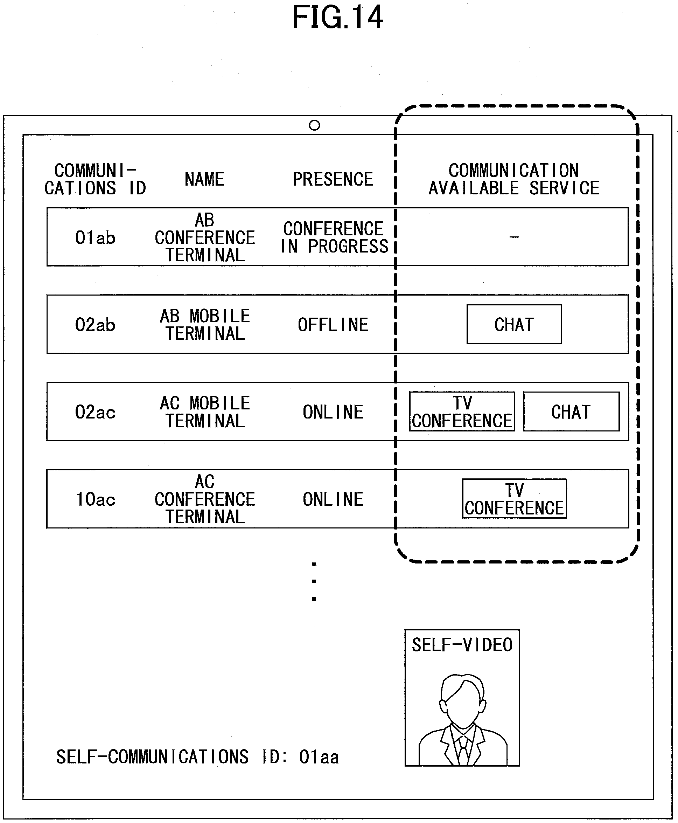

FIGS. 13 and 14 are diagrams illustrating screen examples of the destination list displayed with the presence. FIG. 13 illustrates a screen example where the own communications terminal only utilizes the TV conference service, and does not collaborate with other services. The screen example displays the presence of the communications terminals on the destination list including information displayed as "conference in progress", "offline", and "online".

FIG. 14 illustrates an example where the own communications terminal utilizes the TV conference service and the text chat service that collaborate with each other. The screen example displays communication available services based on integrated presence in addition to the normal presence. More specifically, the mobile terminal having a communications ID "02ab" indicates that the mobile terminal is capable of using the text chat service. The mobile terminal having a communications ID "02ac" indicates that the mobile terminal is capable of using the TV conference service and the text chat service. The conference terminal having a communications ID "10ac" indicates that the conference terminal is capable of using the TV conference service.

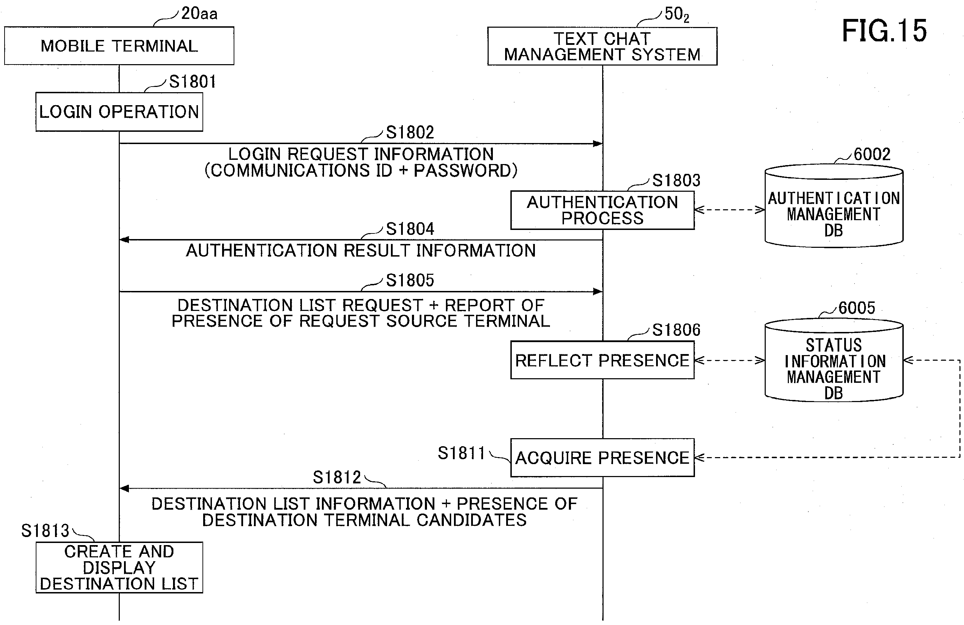

The following illustrates a detailed process in which a user operates the mobile terminal 20aa to display a certain destination list composed of destination terminal candidates with respect to the mobile terminal 20aa. FIG. 15 is a sequence diagram illustrating an example of a process from a mobile terminal login step to a destination list display step according to an embodiment.

The user performs a login operation via the input device 202 of the mobile terminal 20 (step S1801). The operations input receiver 12 of the mobile terminal 20 receives the login operation and transmits login request information to the text chat management system 50₂ (step S1802). This login request information includes a communications ID and a password. The communications ID is designed to identify the mobile terminal 20aa of the user's own terminal serving as a request source terminal. Note that the communications ID and the password are input from the user via the operations input receiver 12 when the user performs the login operation. Note that when the login request information is transmitted from the mobile terminal 20aa to the text chat management system 50₂, the text chat management system 50₂ that receives the login request information may be able to detect the IP address of the mobile terminal 20aa that transmits the login request information.

Subsequently, when the authentication part 52 of the text chat management system 50₂ receives the login request information via the transmitter-receiver 51, the authentication part 52 performs an authentication process (step S1803). This authentication process is illustrated with reference to FIG. 12 in a manner similar to the illustration of the authentication process of the TV conference-specific terminal 10aa. FIG. 12 is a flowchart illustrating an example of an authentication process according to an embodiment.

The authentication part 52 of the text chat management system 50₂ determines whether the authentication management DB 6002 of the common information management apparatus 60 manages a communications ID and password combination identical to the communications ID and password combination included in the login request information (step S1501). In this step, the text chat management system 50₂ acquires the authentication management table from the authentication management DB 6002 of the common information management apparatus 60 to determine whether the authentication management table manages a communications ID and password combination identical to the communications ID and password combination included in the login request information. Alternatively, the common information management apparatus 60 may determine whether the authentication management DB 6002 (the authentication management table) of the common information management apparatus 60 manages a communications ID and password combination identical to the communications ID and password combination included in the login request information, and the authentication part 52 of the text chat management system 50₂ may acquire a determination result from the common information management apparatus 60. When it is determined that the authentication management DB 6002 includes the communications ID and password combination identical to the communications ID and password combination included in the login request information, step S1506 is processed to generate an authentication result indicating successful login. On the other hand, when it is determined that the authentication management DB 6002 does not include the communications ID and password combination identical to the communications ID and password combination included in the login request information, step S1507 is processed to generate an authentication result indicating login failure.

The text chat management system 50₂ that has received the login request information from the mobile terminal 20aa thus generates the authentication result indicating the successful login based on the communications ID and password included in the login request information.

The illustration of the process continues as follows by referring back to FIG. 15. The transmitter-receiver 51 of the text chat management system 50₂ transmits the authentication result generated in the authentication process of the step S1803 to the mobile terminal 20aa (step S1804). In the following description, it is assumed that the text chat management system 50₂ has transmitted the authentication result indicating a successful login to the mobile terminal 20aa. Note that when the mobile terminal 20aa receives the authentication information indicating login failure from the text chat management system 50₂, the mobile terminal 20aa displays a screen indicating the login failure on the display device 203 of the mobile terminal 20aa to end the process.

Subsequently, when the transmitter-receiver 11 of the mobile terminal 20aa receives the authentication result indicating the successful login from the text chat management system 50₂, the mobile terminal 20aa transmits a destination list request and a report of the presence of the mobile terminal 20aa (step S1805). Note that examples of the report of the presence of the mobile terminal 20aa include "online (communicative)", "text chat in progress (chat)", and "offline (incommunicative)".

Subsequently, the status manager 53 of the text chat management system 50₂ changes the presence of the request source terminal (the mobile terminal 20aa) in the status information management DB 6005 of the common information management apparatus 60 into "online (communicative)" (step S1806).

The status reporting-acquiring-transferring part 55 of the text chat management system 50₂ acquires the presence of the mobile terminal 20ab (the communications ID "02ab") and the like from the status information management DB 6005 of the common information management apparatus 60 (step S1811).

The transmitter-receiver 51 of the text chat management system 50₂ subsequently transmits destination list information of the request source terminal (the communications IDs and the presence of the destination terminal candidates) to the request source terminal (the mobile terminal 20aa) (step S1812). In this example, the transmitter-receiver 51 transmits the destination list information of the mobile terminal 20aa serving as the request source terminal, and the presence of the mobile terminal 20ab and the like serving as the destination terminal candidates included in the destination list to the mobile terminal 20aa.

When the destination list creating part 17 of the mobile terminal 20aa receives the destination list information and the presence of the destination terminal candidates from the text chat management system 50₂, the destination list creating part 17 creates a destination list and displays the destination list on the display device 203 (step S1813).

### PROCESS EXAMPLE PERFORMED BY STATUS INFORMATION PROCESSOR

The status reporting-acquiring-transferring part 55 of the transmission management system 50 provided in each of the services transfers the presence received from the transmission terminals 10 and 20 to the common information management apparatus 60 as well as displaying and updating the presence of the destination list displayed on the transmission terminals 10 and 20 utilizing the presence information provided by the common information management apparatus 60.

The status information processor 63 of the common information management apparatus 60 generates the latest presence information, and provides the transmission management systems 50 provided in the respective services with the generated latest presence information at a timing at which the transmission management systems 50 in the respective services display and update the destination lists of the transmission terminals 10 and 20, and at a timing at which the transmission management systems 50 receive changes in the presence information from the transmission terminals 10 and 20.

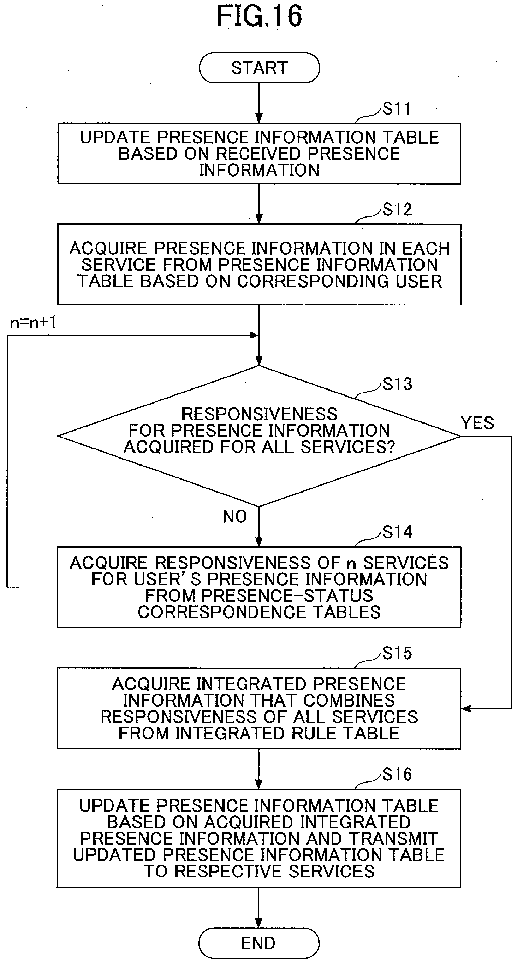

FIG. 16 is a flowchart illustrating a process example performed by the status information processor 63 of the common information management apparatus 60. More specifically, FIG. 16 illustrates a process from the reception of the presence information of the user transferred from the status reporting-acquiring-transferring part 55 of the transmission management system 50 provided in each of the services to the transmission of the integrated presence information to the transmission management system 50 of a corresponding one of the services.

As illustrated in FIG. 16, the status information processor 63 updates the presence information table (FIG. 10A) based on the received presence information of the service (step S11).

The status information processor 63 subsequently acquires presence information of the collaborating services corresponding to the user (user ID) from the presence information table (FIG. 10A) (step S12).

The status information processor 63 subsequently determines whether the responsiveness (status) for the presence information is acquired for all the collaborating services (i.e., the text chat service and the TV conference service in this example) (step S13).

When the responsiveness (status) for the presence information is not acquired for all the collaborating services ("NO" in step S13), the status information processor 63 acquires the responsiveness (status) of the n services for the presence information of the corresponding user from the presence-status correspondence tables (FIGS. 10B and 10C) (step S 14), increments n, and proceeds with (returns to) the determination step as to whether the responsiveness (status) for the presence information is acquired for all the collaborating services (step S13).

When the responsiveness (status) for the presence information is acquired for all the collaborating services ("YES" in step S13), the status information processor 63 acquires the integrated presence information (the common status) that combines the responsiveness (statuses) of all the services from the integrated rule table FIG. 10D (step S15).

The status information processor 63 subsequently updates the presence information table (FIG. 10A) based on the acquired integrated presence information (the common status), and transmits the updated presence information table to the respective services (step S16).

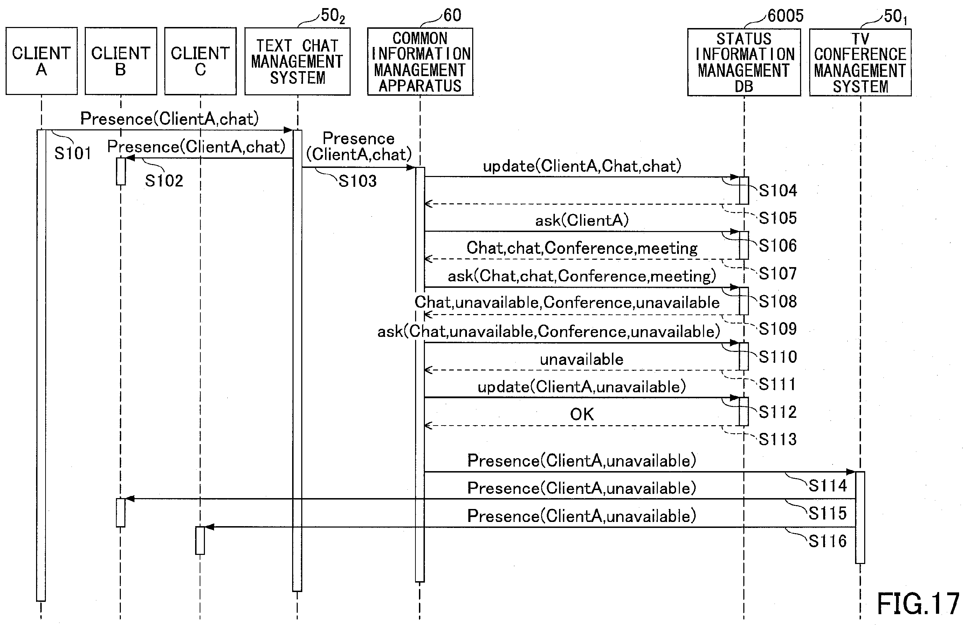

FIG. 17 is a sequence diagram illustrating a process example when clients update presence information. This sequence diagram illustrates the TV conference service based on the TV conference management system 50₁ and the text chat service based on the text chat management system 50₂ as well as the clients A to C as transmission terminals (communications terminals). Note that the sequence diagram assumes the client A corresponds to the terminal having the user ID (the communications ID) of "01ab" in FIG. 10A.

As illustrated in FIG. 17, when the client A, for example, reports that the presence of the client A has changed to "chat" to the text chat management system 50₂ (step S101), the text chat management system 50₂ reports to the client B registered as the destination of the client A that the presence of the client A has changed to "chat" (step S102).

The text chat management system 50₂ reports (transfers the report) that the presence of the client A has changed to "chat" to the common information management apparatus 60 via the status reporting-acquiring-transferring part 55 (step S103).

The status information processor 63 of the common information management apparatus 60 updates the presence information table (FIG. 10A) of the status information management DB 6005 with information indicating that the presence of the client A that has changed to "chat" (steps S104 and S105) (corresponding to step S11 of FIG. 16).

The status information processor 63 subsequently acquires the presence of all the services relating to the client A from the presence information table (FIG. 10A) of the status information management DB 6005 (steps S106 and 107) (corresponding to step S12 of FIG. 16). This example assumes that the status information processor 63 has acquired "chat" for the text chat service and "meeting" for the TV conference service.

The status information processor 63 subsequently acquires responsiveness (status) corresponding to the presence "chat" of the text chat service and responsiveness (status) corresponding to the "meeting" presence of the TV conference service from the presence-status correspondence tables (FIGS. 10B and 10C) of the status information management DB 6005 (steps S108 and S109) (corresponding to steps S13 and S14 of FIG. 16). This example assumes that the status information processor 63 has acquired "unavailable" responsiveness for the text chat service and "unavailable" responsiveness for the TV conference service.

The status information processor 63 subsequently acquires the integrated presence (common status) corresponding to the status "unavailable" of the text chat service and the status "unavailable" of the TV conference service from the integrated rule table (FIG. 10D) of the status information management DB 6005 (steps S110 and S111) (corresponding to step S15 of FIG. 16). This example assumes that the status information processor 63 acquires the integrated presence "unavailable".

The status information processor 63 subsequently updates the presence information table (FIG. 10A) of the status information management DB 6005 with information indicating that the integrated presence of the client A has changed to "unavailable" (steps S112 and S113), and reports the integrated presence "unavailable" of the client A to the TV conference management system 50₁ (step S114) (corresponding to step S16 of FIG. 16).

Having received the integrated presence "unavailable" of the client A, the TV conference management system 50₁ reports the integrated presence "unavailable" of the client A to a client B and to a client C (steps S115 and S116).

### ANOTHER PROCESS EXAMPLE BY STATUS INFORMATION PROCESSOR

The process examples illustrated in FIGS. 16 and 17 are based on the presence information table illustrated in FIG. 10A, which assumes that the user ID (the communications ID) that are common to (or shared by) two or more services. In practice, the respective services may use different accounts (different user identification information), and it may be inappropriate to use the common use ID as it is. The following illustrates an example of handling a case where the different services use different accounts.

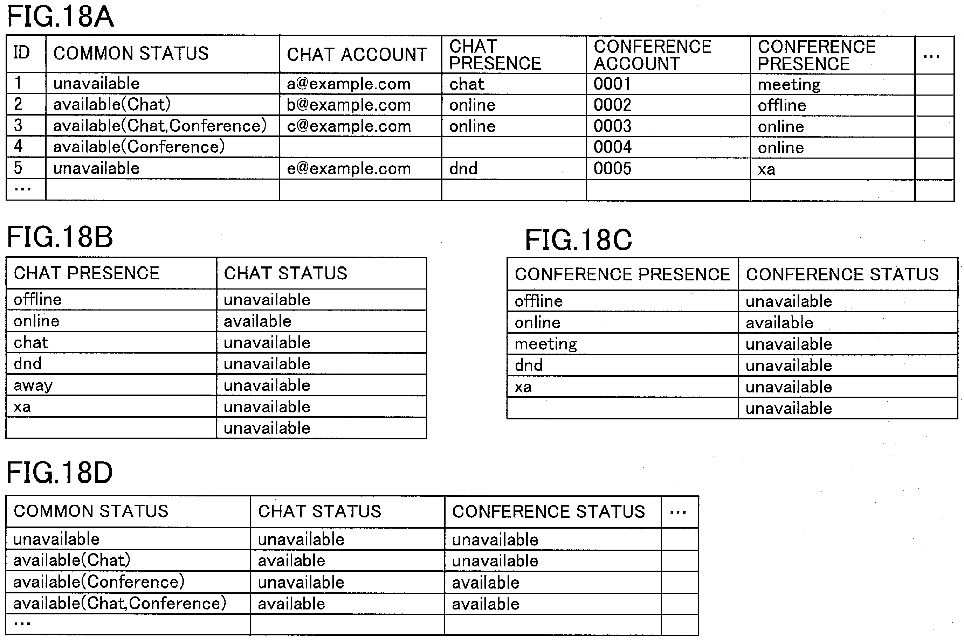

FIGS. 18A to 18D are diagrams illustrating examples of various types of tables maintained in the status information management DB 6005. The presence information table, the presence-status correspondence tables, and the integrated rule table in FIGS. 18A to 18D are similar to those of FIG. 10A to 10D; however, the presence information table (FIG. 18A) includes some change. The presence-status correspondence tables, and the integrated rule table are the same as those of FIGS. 18B to 18D.

As illustrated in FIG. 18A, the presence information table includes items of "ID", "chat account", "chat presence", "conference account", and "conference presence". The "ID" is unique administrative identification information. The "chat account" is a user's account for use in the text chat service. The "conference account" is a user's account for use in the TV conference service. To increase a collaborating service, an account and a status of that collaborating service are added. Note that the chat account and the conference account in this example may be considered as the communications ID.

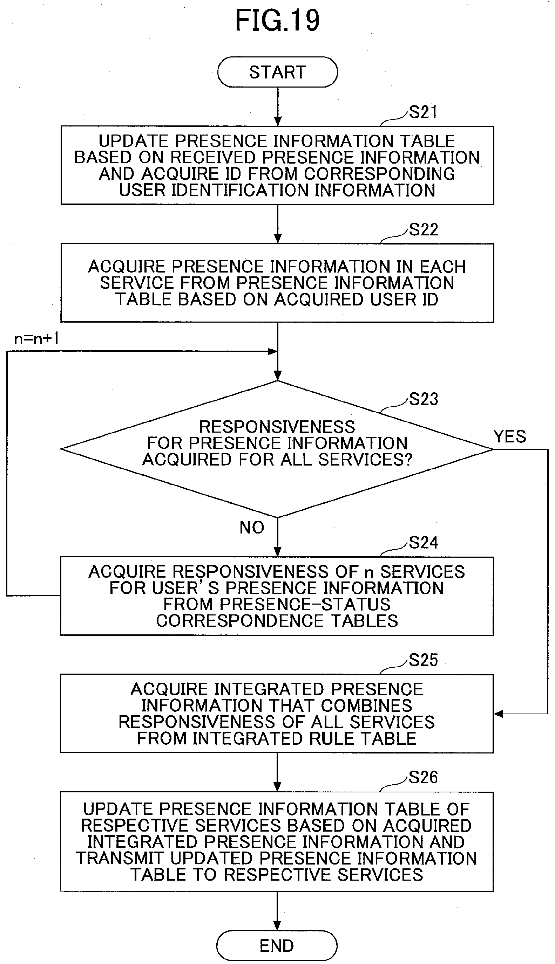

FIG. 19 is a flowchart illustrating another process example performed by the status information processor 63 of the common information management apparatus 60. More specifically, FIG. 19 illustrates a process from the reception of the presence information of the user transferred from the status reporting-acquiring-transferring part 55 of the transmission management system 50 provided in each of the services to the transmission of the integrated presence information to the transmission management system 50 of a corresponding one of the services.

As illustrated in FIG. 19, the status information processor 63 updates the presence information table (FIG. 18A) based on the received presence information of the service, and acquires a corresponding ID from the user identification information (account) (step S21).

The status information processor 63 subsequently acquires presence information of the collaborating service based on the acquired ID from the presence information table (FIG. 18A) (step S22).

The status information processor 63 subsequently determines whether the responsiveness (status) for the presence information is acquired for all the collaborating services (i.e., the text chat service and the TV conference service in this example) (step S23).

When the responsiveness (status) for the presence information is not acquired for all the collaborating services ("NO" in step S23), the status information processor 63 acquires the responsiveness (status) of the n services for the presence information of the corresponding ID from the presence-status correspondence tables (FIGS. 18B and 18C) (step S24), increments n, and proceeds with (returns to) the determination step as to whether the responsiveness (status) for the presence information is acquired for all the collaborating services (step S23).

When the responsiveness (status) for the presence information is acquired for all the collaborating services ("YES" in step S23), the status information processor 63 acquires the integrated presence information (common status) that combines the responsiveness (statuses) of all the services from the integrated rule table FIG. 18D (step S25).

The status information processor 63 subsequently updates the presence information table (FIG. 18A) based on the acquired integrated presence information (common status), and transmits the updated presence information table to the respective services (step S26). Note that the status information processor 63 acquires the user identification information (account) of another service in the reporting destination and specifies the acquired user identification information (account) for updating the presence information table.

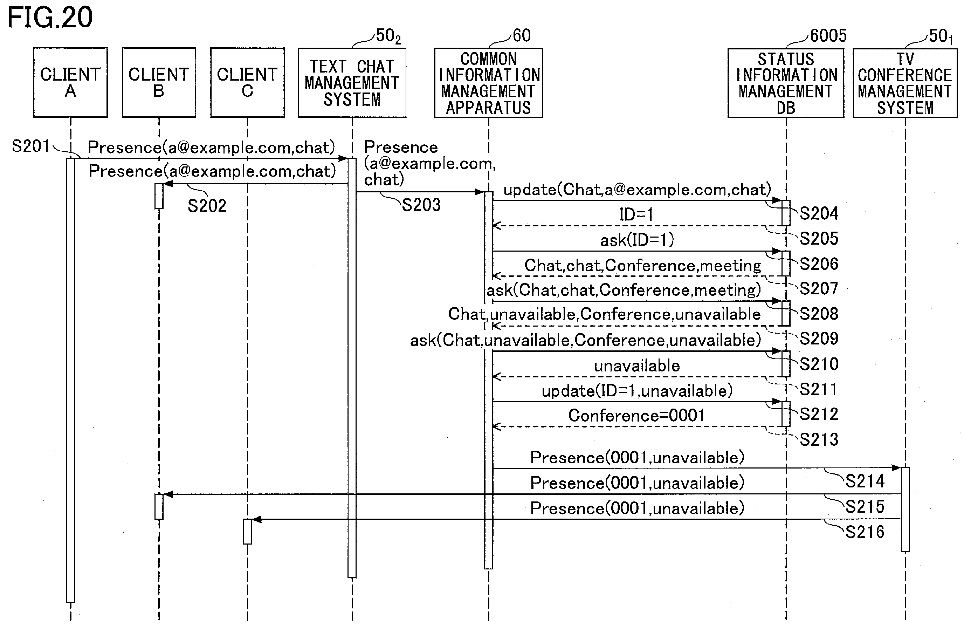

FIG. 20 is a sequence diagram illustrating a process example when a client updates presence information. This sequence diagram illustrates the TV conference service based on the TV conference management system 50₁ and the text chat service based on the text chat management system 50₂ as well as the clients A to C as transmission terminals (communications terminals). Note that the sequence diagram assumes the client A corresponds to the terminal having the ID (the communications ID) of "1".

As illustrated in FIG. 20, when the client A, for example, reports the presence of the client A has changed to "chat" together with the account "client @example.com" for use in the text chat service to the text chat management system 50₂ (step S201), the text chat management system 50₂ reports to the client B registered as the destination of the client A that the presence of the client A having the account "client @example.com" has changed to "chat" (step S202).

The text chat management system 50₂ reports (transfers the report) that the presence of the client A having the account "client @example.com" has changed to "chat" to the common information management apparatus 60 via the status reporting-acquiring-transferring part 55 (step S203).

The status information processor 63 of the common information management apparatus 60 updates the presence information table (FIG. 18A) of the status information management DB 6005 with information indicating that the presence of the client A having the account "client @example.com" has changed to "chat", and acquires the ID "1" corresponding to the account "client @example.com" (steps S204 and S205) (corresponding to step S21 of FIG. 19).

The status information processor 63 subsequently acquires the presence of all the services relating to the client A having the ID "1" from the presence information table (FIG. 18A) of the status information management DB 6005 (steps S206 and S207) (corresponding to step S22 of FIG. 19). This example assumes that the status information processor 63 has acquired "chat" for the text chat service and "meeting" for the TV conference service.

The status information processor 63 subsequently acquires responsiveness (statuses) corresponding to the presence "chat" of the text chat service and responsiveness (statuses) corresponding to the "meeting" presence of the TV conference service from the presence-status correspondence tables (FIGS. 18B and 18C) of the status information management DB 6005 (steps S208 and S209) (corresponding to steps S23 and S24 of FIG. 19). This example assumes that the status information processor 63 has acquired "unavailable" responsiveness for the text chat service and "unavailable" responsiveness for the TV conference service.

The status information processor 63 subsequently acquires the integrated presence (common status) corresponding to the status "unavailable" of the text chat service and the status "unavailable" of the TV conference service from the integrated rule table (FIG. 18D) of the status information management DB 6005 (steps S210 and S211) (corresponding to step S25 of FIG. 19). This example assumes that the status information processor 63 acquires the integrated presence "unavailable".

The status information processor 63 subsequently updates the presence information table (FIG. 10A) of the status information management DB 6005 with information indicating that the integrated presence of the client A having the ID "1" has changed to "unavailable" while acquiring an account "0001" of the client A of ID "1" in the TV conference service (steps S212 and S213), and reports the integrated presence "unavailable" of the client A having the account "0001" to the TV conference management system 50₁ (step S214) (corresponding to step S26 of FIG. 19).

Having received the integrated presence "unavailable" of the client A, the TV conference management system 50₁ reports the integrated presence "unavailable" of the client A to a client B and to a client C (steps S215 and S216).

Note that in the embodiment there has been described the collaboration of the TV conference service and the text chat service as an example; however, the collaboration is not limited to this example. There may be employed various other collaborations, such as an instant message service, calling service, other text chat service and the like collaborating with video chat service, SNS, and the like.

### STILL ANOTHER PROCESS EXAMPLE BY STATUS INFORMATION PROCESSOR

FIGS. 10A to 10D, and FIGS. 16 to 20 illustrate the process examples of acquiring presence of all the terminals displayed on the destination list in two or more services systematically collaborating with each other in order to display the communication available services as the integrated presence. However, a certain terminal (a target terminal) may have some services in which this target terminal and another terminal displayed on the destination list of the target terminal do not mutually register each other as destinations. Displaying the presence of the terminals for such services is not desirable in terms of security and privacy. In general, the services of this kind only allow the registration of destination when the target terminal and the other terminal mutually approve each other, and only the mutually approved terminals are allowed to share their presence in the services. However, the above setting may violate the allowed range of displaying the presence of the terminals in the services. Hence, the following process example adds the limitation in providing the integrated presence based on the destination information for each service.

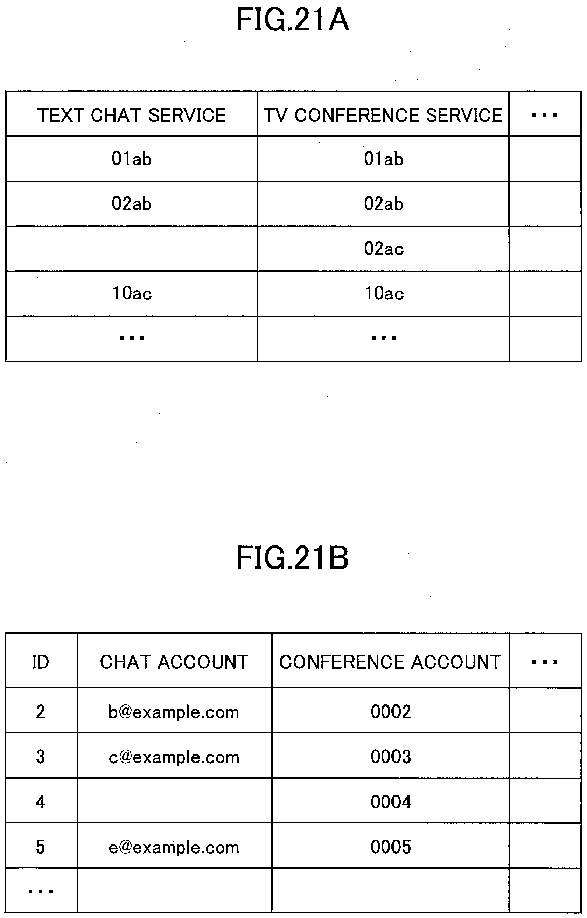

The data maintained in the status information management DB 6005 are the same as those illustrated in FIGS. 10A to 10D and those illustrated in FIGS. 18A to 18D. In addition, the data maintained in the status information management DB 6005 further includes an integrated destination list as data temporarily generated and used in the course of the process. FIGS. 21A and 21B are diagrams illustrating examples of integrated destination lists. FIG. 21A corresponds to the example illustrated in FIGS. 10A to 10D when there are the communications IDs common to the services, and FIG. 21B corresponds to the example illustrated in FIGS. 18A to 18D when there are no communications IDs common to the services.

The integrated destination list in FIG. 21A is designed to merge destination information (communications IDs) acquired from the destination list management DB 5003 of the text chat management system 50₂ and the destination list management DB 5003 of the TV conference management system 50₁, respectively, based on the communications ID of a target terminal(hereinafter also called an "integrated presence providing terminal") to which the integrated presence information is provided. FIGS. 21A illustrates an example in which the terminals having the communications IDs "01ab", "02ab", and "10ac" are registered in both the text chat service and the TV conference service, but the terminal having the communications ID "02ac" is registered only in the text chat service for providing the integrated presence information to the target terminal (the integrated presence providing terminal) having the communications ID "01aa".

The integrated destination list in FIG. 21B is designed to merge destination information (the chat account and the conference account) acquired from the destination list management DB 5003 of the text chat management system 50₂ and the destination list management DB 5003 of the TV conference management system 50₁, respectively, based on the ID (identification information) that associates the chat account of the text chat service with the conference account of the TV conference service for each of the terminals. FIG. 21B illustrates an example in which the terminals having the chat accounts "b@example.com", "c@example.com", and "e@example.com" are registered in both the text chat service and the TV conference service, but the terminal having the conference account "0004" is registered only in the TV conference service for providing the integrated presence information to the target terminal (the integrated presence providing terminal) having the ID "1".

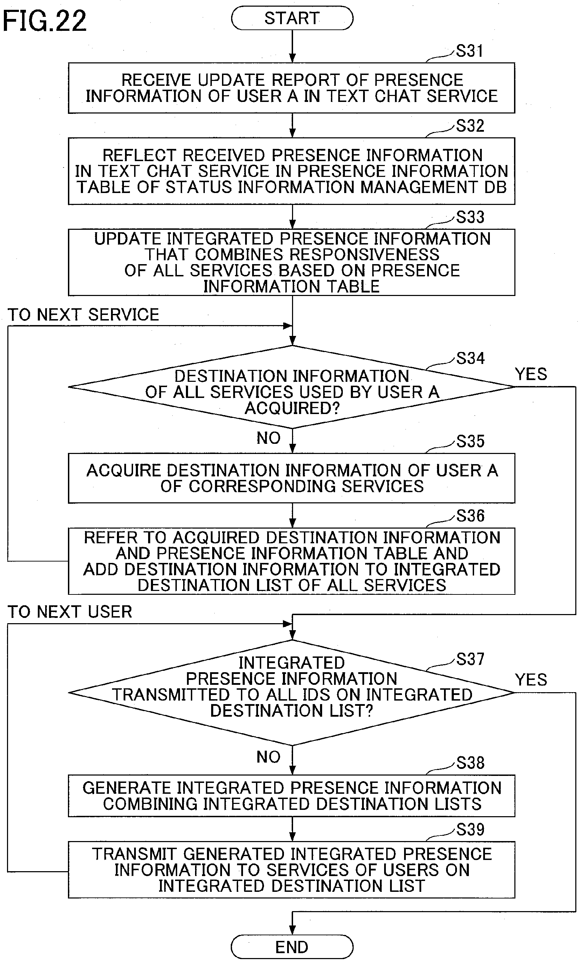

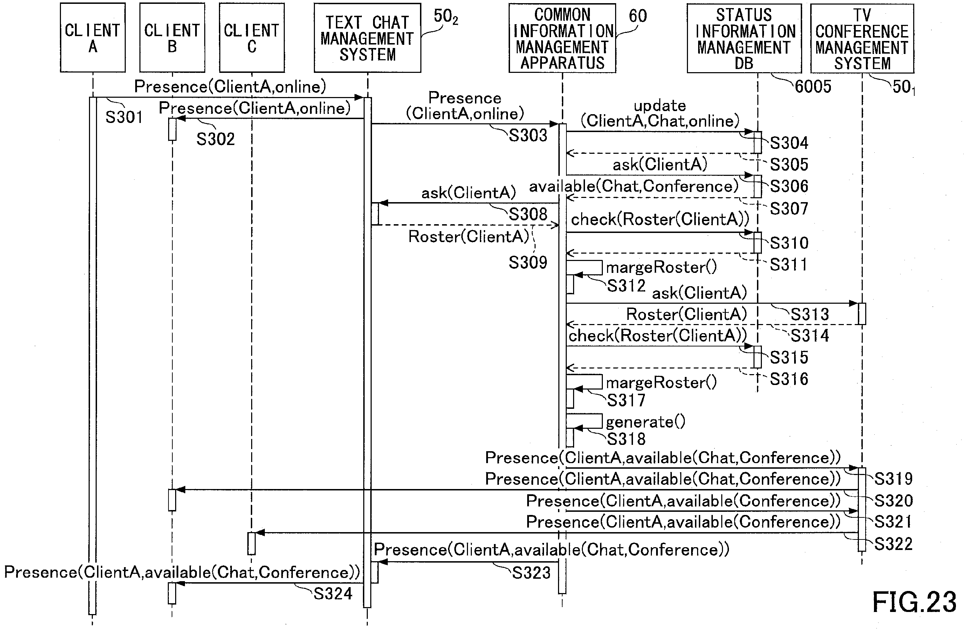

FIG. 22 is a flowchart illustrating a process example performed by the status information processor 63 of the common information management apparatus 60. More specifically, FIG. 23 illustrates a process from the reception of the presence information of the user transferred from the status reporting-acquiring-transferring part 55 of the transmission management system 50 provided in each of the services to the transmission of the integrated presence information to the transmission management system 50 of a corresponding one of the services. The following illustrates the process applied to a case in which there are the communications IDs that are common to the services. The process applied is not limited to such a case, and the process may similarly be applied to a case where there are no communications ID that is common to the services.

As illustrated in FIG. 22, the status information processor 63 receives an update report of the presence information in the text chat service from the client A (the communications ID "01ab") via the transmitter-receiver 61 (step S31).

The status information processor 63 subsequently reflects the received presence information in the text chat service in the presence information table (FIG. 10A) of the status information management DB 6005 (step S32).

The status information processor 63 subsequently updates the common status (the integrated presence information) of the presence information table of the status information management DB 6005 based on the updated presence information (step S33).

The status information processor 63 determines whether the destination information is acquired from the transmission management systems 50 of all the services used by the client A (step S34). Note that "all the services used by the client A" indicates all the services in which the presence table includes information about the presence of the client A. In a case where there is no communications ID that is common to the services, "all the services used by the client A" indicates all the services in which the presence table includes the account of the client A.

When the status information processor 63 determines that the destination information is not acquired from the transmission management systems 50 of all the services used by the client A ("NO" in step S34), the status information processor 63 acquires the destination information of the client A from the transmission management systems 50 of the corresponding services (step S35).

When the status information processor 63 refers to the acquired destination information and those of all the services used by each of the clients in the presence information tables, and has found no disagreement in the presence, the status information processor 63 adds the acquired destination information to the integrated destination list (FIG. 21A) of all the services used by the client A while maintaining correspondence with the services (step S36), and subsequently proceeds with the determination as to whether the destination information is acquired (back to step S34).

When the status information processor 63 determines that the destination information is acquired from the transmission management systems 50 of all the services used by the client A ("YES" in step S34), the status information processor 63 determines whether the common status (the integrated presence information) of the presence information table is transmitted to all the communications IDs (terminals) on the integrated destination list (step S37).

When the status information processor 63 determines that there is any terminal to which the common status is not transmitted ("NO" in step S37), the status information processor 63 generates integrated presence information corresponding to the service used by the counterpart of the destination on the integrated destination list, which is extracted from the integrated presence information of the client A (step S38).

The status information processor 63 subsequently transmits the generated integrated presence information to each of the services of the clients on the integrated destination list (step S39), and proceeds with the determination as to whether the integrated presence information is transmitted (back to step S37). When the status information processor 63 determines that the common status is transmitted to all the clients ("YES" in step S37), the status information processor 63 ends the process.

FIG. 23 is a sequence diagram illustrating a process example when a client updates presence information. This sequence diagram illustrates the TV conference service based on the TV conference management system 50₁ and the text chat service based on the text chat management system 50₂ as well as the clients A to C as transmission terminals (communications terminals).

As illustrated in FIG. 23, when the client A, for example, reports that the presence of the client A has changed to "online" to the text chat management system 50₂ (step S301), the text chat management system 50₂ reports to the client B registered as the destination of the client A that the presence of the client A has changed to "online" (step S302).

The text chat management system 50₂ reports (transfers the report) that the presence of the client A has changed to "online" to the common information management apparatus 60 via the status reporting-acquiring-transferring part 55 (step S303).

The status information processor 63 of the common information management apparatus 60 reflects information indicating that the presence of the client A that has changed to "online" in the presence information table (FIG. 10A) of the status information management DB 6005 (steps S304 and S305) (corresponding to steps S32 of FIG. 22).

The status information processor 63 of the common information management apparatus 60 updates the presence information table of the status information management DB 6005 based on the updated presence information, and acquires the integrated presence information of the client A (steps S306 and S307) (corresponding to step S33 of FIG. 22). This example assumes having acquired the text chat service and the TV conference service being available as the integrated presence information of the client A.

The status information processor 63 of the common information management apparatus 60 acquires the destination information (Roster) in the text chat service of the client A from the text chat management system 50₂ (steps S308 and S309) (corresponding to step S35 of FIG. 22).

The status information processor 63 of the common information management apparatus 60 refers to the acquired destination information and the presence information table of status information management DB 6005 (steps S310 and S311), and adds the acquired destination information to the integrated destination lists (FIG. 21A) of all the services of the client A while maintaining associated relationship referred to with the acquired destination information (step S312) (corresponding to step S36 of FIG. 22).

The status information processor 63 of the common information management apparatus 60 acquires the destination information (Roster) in the TV conference service of the client A from the TV conference management system 50₁ (steps S313 and S314) (corresponding to step S35 of FIG. 22).

The status information processor 63 of the common information management apparatus 60 refers to the acquired destination information and the presence information table of status information management DB 6005 (steps S315 and S316), and adds the acquired destination information to the integrated destination lists (FIG. 21A) of all the services of the client A while maintaining associated relationship referred to with the acquired destination information (step S317) (corresponding to step S36 of FIG. 22).

The status information processor 63 of the common information management apparatus 60 generates integrated presence information corresponding to the service used by the counterpart of the destination on the integrated destination list, which is extracted from the integrated presence information of the client A (step S318). For example, when the client B and the client A mutually register each other as destinations of the counterpart in both the text chat service and the TV conference service, the integrated presence information including the presence of the client A in the text chat service and the presence of the client A in the TV conference service is generated with respect to the client B. When the client C and the client A mutually register each other as destinations of the counterpart in the TV conference service alone, the integrated presence information including the presence of the client A in the TV conference service alone is generated with respect to the client C.

The status information processor 63 of the common information management apparatus 60 transmits the integrated presence information of the client A generated for the client B based on the integrated destination list to the TV conference management system 50₁ (step S319).

Having received the integrated presence information of the client A, the TV conference management system 50₁ transmits the received integrated presence information of the client A to the client B (step S320).

Further, the status information processor 63 of the common information management apparatus 60 transmits the integrated presence information of the client A generated for the client C based on the integrated destination list to the TV conference management system 50₁ (step S321).

Having received the integrated presence information of the client A, the TV conference management system 50₁ transmits the received integrated presence information of the client A to the client C (step S322).

The status information processor 63 of the common information management apparatus 60 transmits to the integrated presence information of the client A generated for the client B based on the integrated destination list to the text chat management system 50₂ (step S323).

Having received the integrated presence information of the client A, the text chat management system 50₂ transmits the received integrated presence information of the client A to the client B (step S324).

### FROM SELECTING DESTINATION TERMINAL TO ESTABLISHING SESSION

The following describes a process of initiating connection in order to perform the TV conference service or the text chat service between a request source terminal and a destination terminal. The process is an example where the mobile terminal 20aa serving as the request source terminal selects the TV conference-specific terminal 10ab having the communications ID "01ab" from a destination list 4100 of a destination list display screen 4000 displayed on a display device 203 to initiate connection for conducting the TV conference. Note that this example assumes selecting a destination terminal and a service by clicking displayed icons ("TV conference", "chat", etc.) from the "communications available service" column of the destination list illustrated in FIG. 14.

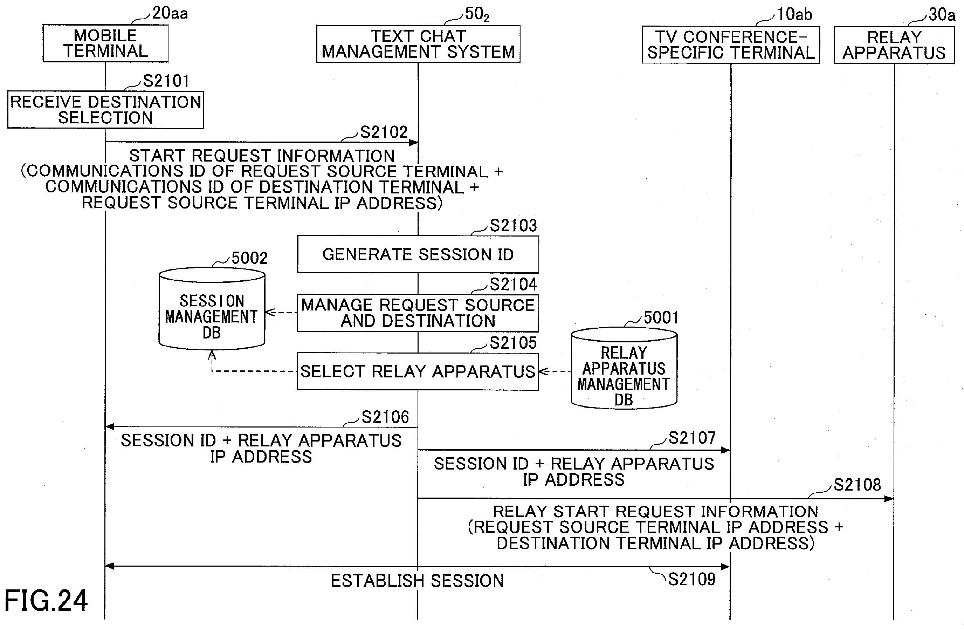

FIG. 24 is a sequence diagram illustrating a process example of initiating connections between multiple terminals according to the embodiment.

When a user selects a destination terminal having the communications ID "01ab" on the destination list 4100 via an input device 202 of the mobile terminal 20aa, the operations input receiver 12 receives a connection start request (step S2102). The transmitter-receiver 11 of the mobile terminal 20aa transmits start request information including the communications ID "02aa" of the request source terminal (the mobile terminal 20aa) and the communications ID "01ab" of the destination terminal (TV conference-specific terminal 10ab) with indication to start connection to the text chat management system 50₂ (step S2102). The text chat management system 50₂ detects the IP address "1.4.1.1" of the request source terminal (the mobile terminal 20aa) as a result. Note that the text chat management system 50₂ may update the presence of the request source terminal and the presence of the destination terminal managed by the status information management DB 6005 of the common information management apparatus 60 during "online (calling)".

Note also that in step S2101, when the user selects, for example, the destination terminal having the communications ID "02aa" from the destination list 4100 of the mobile terminal 20aa, the user also selects a desired one of the services (the TV conference service or the text chat service) via which the user wishes to connect the request source terminal to the destination terminal. Further, in step S2102, the start request information also includes a service name of the service used between the request source terminal and the destination terminal.

When the TV conference-specific terminal 10 is used as the request source terminal, the transmitter-receiver 11 of the TV conference-specific terminal 10 transmits the start request information of the step S2102 to the TV conference management system 50₁. The request source terminal transmits the start request information to the transmission management system 50 that manages calling control of the request source terminal itself.

The session manager 56 of the text chat management system 50₂ subsequently generates a session ID (step S2103). This example assumes generating "se1" as a session ID. The session manager 56 of the text chat management system 50₂ manages the generated session ID "se1" by storing the generated session ID "se1" in association with the communications ID "01ab" of the destination terminal (the TV conference-specific terminal 10ab) in the session management DB 5002 (step S2104). Further, the session manager 56 of the text chat management system 502 determines an appropriate relay apparatus 30 (a relay apparatus 30a in this example) for performing communications between the request source terminal (the mobile terminal 20aa) and the destination terminal (the TV conference-specific terminal 10ab), and manages the session ID "se1" generated in step S2103 by storing the session ID "se1" in association with the relay apparatus 30a in the session management DB 5002 (step S2105). Note that a method of determining the appropriate relay apparatus 30 in the above step may, for example, include selecting a relay apparatus 30 that exists on the network of the broadest communications band when the request source terminal (the mobile terminal 20aa) and the destination terminal (the TV conference-specific terminal 10ab) perform communications.

Note that when the request source terminal and the destination terminal perform the text chat service alone, content data transmitted and received between the request source terminal and the destination terminal are text data. Hence, in the above step S2105, a session may be established directly between the request source terminal and the destination terminal without selecting the relay apparatuses 30, or a session may be established between the request source terminal and the destination terminal via the text chat management system 50₂.

The transmitter-receiver 51 of the text chat management system 50₂ subsequently transmits the session ID "se1" generated in step S2103 and the IP address "" of the relay apparatus 30a determined in step S2105 to the request source terminal (the mobile terminal 20aa) and the destination terminal (the TV conference-specific terminal 10ab) (steps S2106 and S2107). Further, the transmitter-receiver 51 of the text chat management system 50₂ transmits the IP address of the request source terminal (the mobile terminal 20aa) and the IP address of the request source terminal (the TV conference-specific terminal 10ab) to the relay apparatus 30a (step S2108). Note that the IP address of the relay apparatus 30a may be acquired from the relay apparatus management DB 5001 via the storing-reading processor 58. A session is thus established between the request source terminal (the mobile terminal 20aa) and the destination terminal (the TV conference-specific terminal 10ab) (step S2109).

Thereafter, the content data are transmitted and received between the request source terminal (the mobile terminal 20aa) and the destination terminal (the TV conference-specific terminal 10aa) via the relay apparatus 30a, based on the session established in step S2109.

Note that the present example is illustrated based on the assumption where the communications ID used is common to the text chat service and the TV conference service (see FIGS. 10A to 10D). However, even when there is no communications ID that is common to the text chat service and the TV conference service (see FIGS. 18A to 18D), the communications may start by clicking icons of the "communications available service" column of the destination list. In such a case, the association between the communications ID in the text chat service and the communications ID in the TV conference service may be inquired about to acquire the communications ID of the destination terminal in the corresponding service. The start request may be implemented by using the acquired communications ID.

### OUTLINE

In the above-described embodiment, it may be possible to clearly display the statuses of the communications partners to increase the operability.

In the embodiment, it may be possible to clearly display the statuses of the communications partners to increase the operability.

The preferred embodiments are described above. In the above embodiments, the present invention is illustrated with specific examples; however, the present invention is not limited to these examples, and various alterations, corrections, or changes may be made without departing from the gist and the scope of the claims of the present invention. Specifically, the present invention shall not be construed as being limited to details of the specific examples and accompanying drawings thereof.

### CORRESPONDENCE BETWEEN TERMS IN THE EMBODIMENTS AND TERMS IN THE CLAIMS

The common information management apparatus 60 is an example of a status information management apparatus. The transmitter-receiver 61 is an example of a receiver. The status information processor 63 is an example of an acquisition unit. The transmitter-receiver 61 is an example of a transmitter.

The present invention is not limited to the specifically disclosed embodiments, and variations and modifications may be made without departing from the scope of the present invention.

## Claims

1. A status information management apparatus comprising:
a receiver configured to receive a report of change in status information of one of communications terminals from a transmission management apparatus that manages communications services between the communications terminals;
an acquisition unit configured to acquire integrated status information indicating a status capable of transmitting a response or a status incapable of transmitting a response, via one of the communications services by acquiring respective pieces of the status information of the communications services concurrently used by a user of the communications terminal corresponding to the received status information; and
a transmitter configured to transmit the integrated status information to the transmission management apparatus that manages the communications services concurrently used by the user.

2. The status information management apparatus according to claim 1, wherein
the acquisition unit acquires the respective pieces of status information of the communications services concurrently used by the user from an information table having status information pieces of the communications services in association with the user ID common to the communications services.

3. The status information management apparatus according to claim 1, wherein
the acquisition unit acquires the respective pieces of status information of the communications services concurrently used by the user from an information table having account information pieces and status information pieces of the communications services in association with unique identification information.

4. The status information management apparatus according to anyone of claims 1 to 3, wherein
the acquisition unit acquires responsiveness corresponding to the status information in each of the communications services based on a correspondence table that associates the responsiveness and the status information in the communications services, and acquires the integrated status information based on an integrated table that associates the combination of responsiveness of the communications services with the integrated status information.

5. The status information management apparatus according to anyone of claims 1 to 4, wherein
the integrated status information is displayed in association with the communications terminal used by the user on a destination list.

6. The status information management apparatus according to anyone of claims 1 to 5, wherein
the acquisition unit acquires status information of a terminal used by a different user, wherein the terminal of the user and the terminal of the different user are registered as destinations of each other in each of the communications services, for each of the terminals of the users to which the status information is provided.

7. The status information management apparatus according to claim 6, wherein
the acquisition unit acquires destination information from the communications services used by the user, and identifies the different user, wherein the terminal of the user and the terminal of the different user are registered as destinations of each other in each of the communications services.

8. A method executed by a status information management apparatus, the method comprising:
receiving a report of change in status information of one of communications terminals from a transmission management apparatus that manages communications services between the communications terminals;
acquiring integrated status information indicating a status capable of transmitting a response or a status incapable of transmitting a response, via one of the communications services by acquiring respective pieces of the status information of the communications services concurrently used by a user of the communications terminal corresponding to the received status information; and
transmitting the integrated status information to the transmission management apparatus that manages the communications services concurrently used by the user.

9. A non-transitory computer-readable recording medium storing a program, wherein when executed by one or more processors, causing a computer serving as a status information management apparatus to execute a process, the process comprising:
receiving a report of change in status information of one of communications terminals from a transmission management apparatus that manages communications services between the communications terminals;
acquiring integrated status information indicating a status capable of transmitting a response or a status incapable of transmitting a response, via one of the communications services by acquiring respective pieces of the status information of the communications services concurrently used by a user of the communications terminal corresponding to the received status information; and
transmitting the integrated status information to the transmission management apparatus that manages the communications services concurrently used by the user.

10. A transmission system comprising:
a transmission management system configured to manage communications services between communications terminals; and
a status information management apparatus configured to provide status information to the transmission management system, wherein
the status information management apparatus includes
a receiver configured to receive a report of change in status information of one of the communications terminals from the transmission management apparatus;
an acquisition unit configured to acquire integrated status information indicating a status capable of transmitting a response or a status incapable of transmitting a response, via one of the communications services by acquiring respective pieces of the status information of the communications services concurrently used by a user of the communications terminal corresponding to the received status information; and
a transmitter configured to transmit the integrated status information to the transmission management apparatus that manages the communications services concurrently used by the user.
